# EUROPEAN PATENT APPLICATION

(11) **EP 2 096 822 A2**
(43) Date of publication of application: **02.09.2009**
(21) Application number: 09153973.4
(22) Date of filing: 27.02.2009
(51) Int. Cl.: H04L 29/06

(54) **Voice call communication switching system**

(30) Priority: 29.02.2008 JP 2008051156
(71) Applicant: Fujitsu Limited, Kawasaki-shi, Kanagawa 211-8588 (JP)
(72) Inventor: Watanabe, Naotoshi, Kawasaki-shi, Kanagawa 211-8588 (JP); Osako, Shuhei, Fukuoka-shi, Fukuoka 814-8588 (JP)
(74) Representative: Fenlon, Christine Lesley

(57) **Abstract**

A voice call communication switching system in which a first network and a second network are connected to each other and which includes a user equipment that establishes communication using the networks and an application server that controls communication exchanged. The application server includes a message control unit that receives a message to be sent from the user equipment when a situation is changed from one where the user equipment communicates with another user equipment using resources of the first network to another where the user equipment communicates with the another user equipment using resources of the second network and a session end requesting unit that sends a resource release instruction to disconnect the communication between the first network and the user equipment to the user equipment. The user equipment includes a resource releasing unit that sends a message indicating release of the resources to a node.

## Description

### BACKGROUND

### 1. Field

The present invention relates to a voice call communication switching system in which a first network and a second network are communicably connected to each other and which has user equipment that establishes communication using the networks; and a server apparatus that is provided in the second network and controls communication exchanged between the networks.

### 2. Description of the Related Art

User equipment such as mobile phones widely uses, when performing voice communication, a circuit-switched type network in which communication starts after a line is established between a transmitter and a receiver. The circuit-switched network introduces various voice call communication services using a communication control protocol called ISUP (ISDN (Integrated Services Digital Network) User Part).

In recent years, when performing voice communication, an IP (Internet Protocol) packet exchange type IP packet network has started to be used in which communication is performed by sending a packet to a target destination without establishing a line between a transmitter and a receiver. The IP packet network introduces various voice call communication services using a communication control protocol called SIP (Session Initiated Protocol). An IP packet network based wireless LAN (Local Area Network)/fixed network provides various multimedia services by being connected to an IMS (IP Multimedia Subsystem), which is a system Infrastructure that implements integration by IP technology.

3GPP (3rd Generation Partnership Project) which is a standardized project of third generation mobile communication systems promotes standardization of VCC (Voice Call Continuity) specifications which enable continuation of voice call communication services by switching a voice call between different communication control protocols of the circuit-switched network and the IP packet network. Specifically, an IP packet network based wireless LAN/fixed network implements a voice call communication continuity service between a CS (Circuit Switched) domain, which is a circuit-switched network, and a PS (Packet Switched) domain, which is an IMS side IP packet network by a DTF (Domain Transfer Function) that implements switching control of a voice call as an IMS application.
There are two documents that relate to the related art, 3GPP TS23.206 V7.2.0 (2007-03) "Voice Call Continuity (VCC) between Circuit Switched (CS) and IP Multimedia Subsystem (IMS); Stage2 (Release7)," Sec.6.4 and 3GPP TS24.206 V7.3.0 (2007-09) "Voice Call Continuity between the Circuit-Switched (CS) domain and the IP Multimedia Core Network (CN) (IMS) subsystem; Stage3 (Release7)," Sec.A.6.2.

Namely, in voice call communication switching systems according to conventional techniques, when user equipment (VCC UE) performing communication using a CS domain, which is a circuit-switched network, transfers under communication using a PS domain, which is an IP packet network, without disconnecting the communication of the user equipment, resources having been used when the user equipment performs communication in the CS domain are released via an MGCF (Media Gateway Control Function).

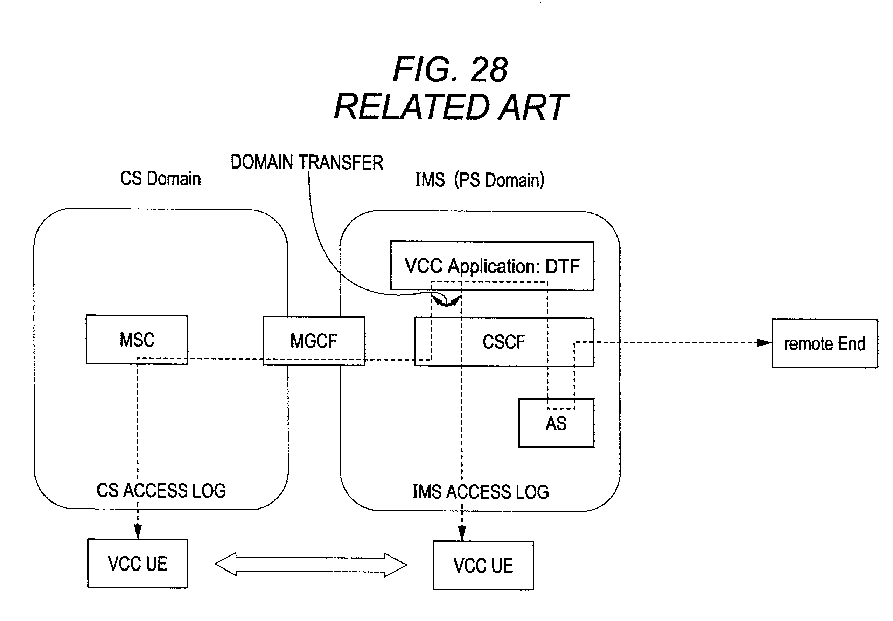

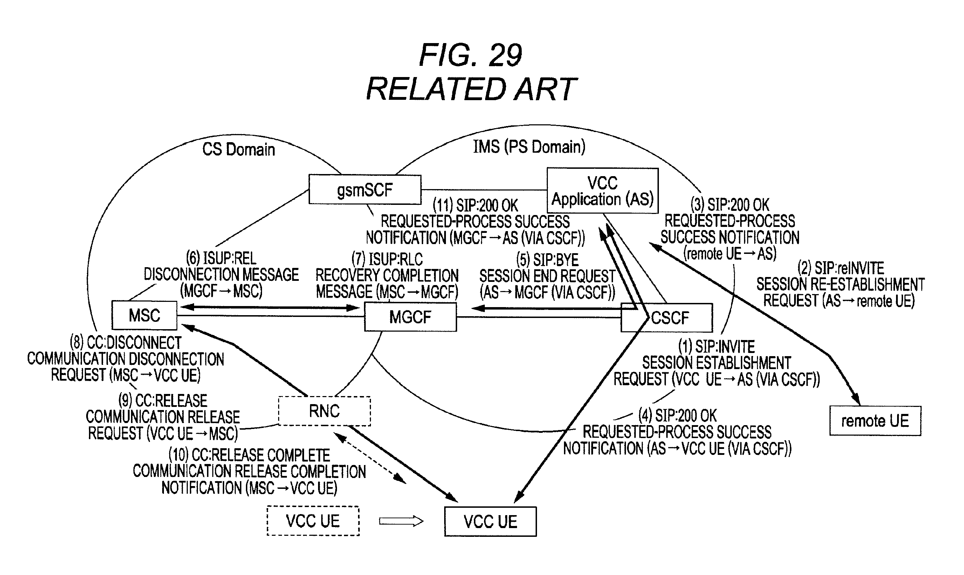

A process performed between the CS domain, which is a circuit-switched network, and the PS domain, which is an IP packet network, by a voice call communication switching system will be described using FIGS. 28 and 29. FIG. 28 is a diagram illustrating an exemplary configuration of a voice call communication switching system according to a conventional technique. FIG. 29 is a diagram illustrating an example of the flow of control signals in the voice call communication switching system according to the conventional technique.

As illustrated in FIG. 28, in a CS domain, which is a circuit-switched network, communication control between VCC UE (User Equipment) and a remote End, which is a communication partner terminal, is performed by an MSC (Mobile-services Switching Centre), which is a service control node in the CS domain. In practice, there are a plurality of one-to-one communications, each performed between a VCC UE and a remote End. In a PS domain, which is an IP packet network, communication control between the VCC UE and the remote End is performed by a CSCF (Call Server Control Function) that provides, for example, routing of SIP, which is a communication control protocol, in the PS domain, and authentication and authorization which are basic services of an IMS. An MGCF (Media Gateway Control Function) disposed between the CS domain and the PS domain performs, for example, conversion or coordination of a communication control protocol between the CS domain and the PS domain. AS (Application Server) provides the above-described services in the PS domain and further include various services other than the above-described services in the PS domain.

In such a configuration, in the voice call communication switching system, communication is performed between the VCC UE and the remote End. In the voice call communication switching system, when the VCC UE transfers between the CS domain and the PS domain, a communication path is switched by a DTF (Domain Transfer) that performs switching control of a control signal in a communication path. The following describes an example in which the DTF (VCC Application) described as one of the services included in the AS (Application Server) is integrated into an AS (Application Server).

The flow of control signals when, in the configuration illustrated in FIG. 28, the VCC UE transfers from the CS domain to the PS domain while communicating with the remote End will be specifically described using FIG. 29. As illustrated in FIG. 29, when the VCC UE transfers from the CS domain to the PS domain, the VCC UE sends a session establishment request "SIP:INVITE" to the AS (Application Server) in the PS domain to switch the communication path from the CS domain to the PS domain (see (1) of FIG. 29).

The AS having received the session establishment request from the VCC UE sends to a remote UE a session re-establishment request "SIP:reINVITE" for switching the communication control from the CS domain having been established up to this point to the PS domain (see (2) of FIG. 29). The remote UE having received the session re-establishment request from the AS sends to the AS a requested-process success notification "SIP:200 OK" which is a response to the received session re-establishment request (see (3) of FIG. 29).

The AS having received the requested-process success notification from the remote UE sends the requested-process success notification "SIP:200 OK" to the VCC UE (see (4) of FIG. 29). The AS having sent the requested-process success notification to the VCC UE sends to the MGCF a session end request "SIP:BYE" to release resources having been used by the VCC UE in the CS domain (see (5) of FIG. 29).

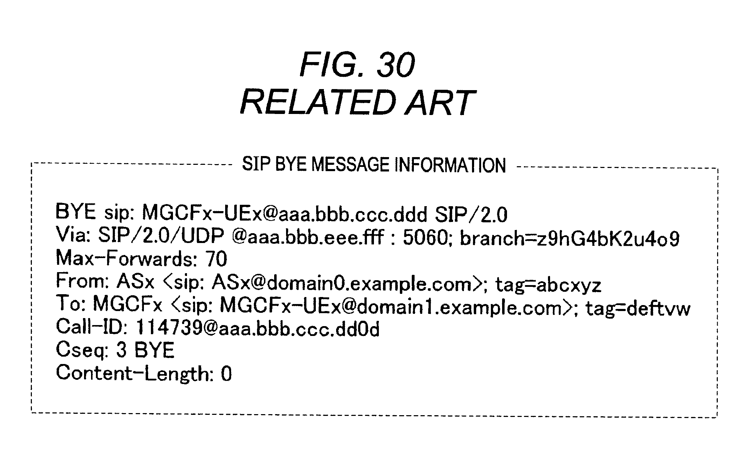

FIG. 30 is a diagram illustrating an example of message information of the session end request "SIP:BYE" sent to the MGCF from the AS according to the conventional technique. As illustrated in FIG. 30, the session end request "SIP:BYE" sent to the MGCF from the AS has information including "BYE sip" indicating the type and destination of the request; "Via" indicating the designation of a request responder; "Max-Forwards" indicating the maximum number of forwards allowed; "From" indicating the sender of the request; "To" indicating the destination of the request; "Call-ID" indicating a session identification ID; "Cseq" indicating a command sequence number and a method; and "Content-Length" indicating message body size.

In FIG. 29, the MGCF having received the session end request from the AS sends to the MSC a disconnection message "ISUP:Release Message (REL)" to disconnect the communication (release the resources) in the CS domain (see (6) of FIG. 29). The MSC having received the disconnection message from the MGCF sends to the MGCF a recovery completion message "ISUP:Release Complete Message (RLC)" indicating that release of the resources (recovery of the resources) used between the MSC and the MGCF has been completed (see (7) of FIG. 29). The MGCF having received the recovery completion message from the MSC sends to the AS a requested-process success notification "SIP: 200 OK" which is a response to the session end request (see (11) of FIG. 29).

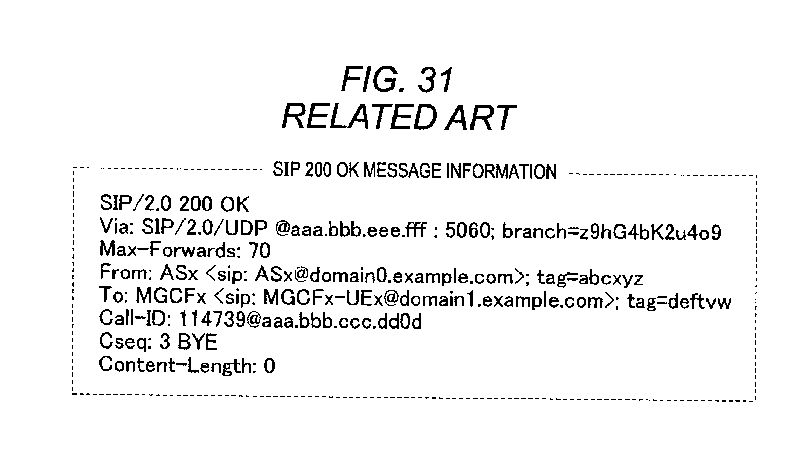

The requested-process success notification "SIP: 200 OK" sent to the AS from the MGCF will be described using FIG. 31. FIG. 31 is a diagram illustrating an example of message information of the requested-process success notification "SIP: 200 OK" sent to the AS from the MGCF according to the conventional technique. As illustrated in FIG. 31, the requested-process success notification "SIP: 200 OK" sent to the AS from the MGCF has information including "SIP/2.0 200 OK" indicating the type and destination of the SIP response; "Via" indicating the designation of a responder to a SIP request; "Max-Forwards" indicating the maximum number of forwards allowed; "From" indicating the sender of the SIP request; "To" indicating the destination of the SIP request; "Call-ID" indicating a session identification ID; "Cseq" indicating a command sequence number and a method; and "Content-Length" indicating message body size.

The MSC having sent the recovery completion message to the MGCF sends a communication disconnection request "CC:DISCONNECT" to the VCC UE via an RNC (Radio Network Controller) to disconnect the communication of the VCC UE performed using the CS domain (to release the resources) (see (8) of FIG. 29).

The VCC UE having received the communication disconnection request from the MSC sends to the MSC a communication release request "CC:RELEASE" which is a response to the communication disconnection request (see (9) of FIG. 29). The MSC having received the communication release request from the VCC UE sends to the VCC UE a communication release completion notification "CC:RELEASE COMPLETE" indicating that the communication has been released (the resources have been released) (see (10) of FIG. 29). A gsmSCF (Global System for Mobile communications Service Control Function) illustrated in FIG. 29 provides supplementary service information in the CS domain.

The above-described technique, however, has a problem that a delay in the release of resources occurs. Hence, congestion of a control signal due to a delay in the release of resources is aggravated.

Specifically, in the CS domain, resources for wired communication between the MSC and the MGCF and wireless communication between the MSC and the VCC UE often rely heavily on a legacy platform and thus are very precious. Therefore, when communication is switched from the CS domain to the PS domain, quick release of resources on the CS domain side is important. However, in the release of resources according to the conventional technique, when the MGCF that provides a control signal conversion/coordination function between the CS domain and the PS domain is congested, a notification of a disconnection message "ISUP:REL" to be sent to the MSC is delayed, whereby a delay in the release of resources in the CS domain occurs. In addition, due to the delay in the release of resources in the CS domain, the congestion of the MGCF is further aggravated.
It is therefore desirable to provide a voice call communication switching system capable of performing quick release of resources.

### SUMMARY

According to an aspect of the embodiments, a voice call communication switching system in which a first network and a second network are communicably connected to each other, the voice call communication switching system includes a user equipment that establishes communication using the networks and an application server that is provided in the second network and controls communication exchanged between the networks. The application server includes a message control unit that receives a message to be sent from the user equipment when a situation is changed from one where the user equipment communicates with another user equipment using resources of the first network to another where the user equipment communicates with the another user equipment using resources of the second network and a session end requesting unit that sends, when the message control unit receives the message, a resource release instruction to disconnect the communication between the first network and the user equipment, to the user equipment through the message control unit. The user equipment includes a resource releasing unit that sends, when receiving the resource release instruction, a message indicating release of the resources having been used in the first network to a node that controls the first network.
The desirable outcomes and advantages of the embodiments will be realized and attained by means of the elements and combinations particularly pointed out in the claims.
It is to be understood that both the foregoing general description and the following detailed description are exemplary and explanatory only and are not restrictive of the invention, as claimed.

### BRIEF DESCRIPTION OF THE DRAWINGS

Preferred features of the present invention will now be described, purely by way of example, with reference to the accompanying drawings, in which:
FIG. 1 is a diagram illustrating an example of the flow of control signals in a voice call communication switching system according to a first embodiment;
FIG. 2 is a diagram illustrating a configuration of the voice call communication switching system according to the first embodiment;
FIG. 3 is a diagram illustrating an example of message information of a session end request "SIP:BYE" sent to user equipment from a message control unit;
FIG. 4 is a diagram illustrating an example of message information of a requested-process success notification "SIP:200 OK" sent to an application server apparatus from a resource releasing unit;
FIG. 5 is a flowchart for describing a resource release instruction process performed by the application server apparatus according to the first embodiment;
FIG. 6 is a flowchart for describing a process of receiving a requested-process success notification in response to a resource release instruction, which is performed by the application server apparatus according to the first embodiment;
FIG. 7 is a flowchart for describing a resource release process performed by the user equipment according to the first embodiment;
FIG. 8 is a diagram illustrating an example of the flow of control signals in a voice call communication switching system according to a second embodiment;
FIG. 9 is a flowchart for describing a resource release instruction process performed by an application server apparatus according to the second embodiment;
FIG. 10 is a flowchart for describing a process of receiving a requested-process success notification in response to a resource release instruction, which is performed by the application server apparatus according to the second embodiment;
FIG. 11 is a diagram illustrating an example of the flow of control signals in a voice call communication switching system according to a third embodiment;
FIG. 12 is a diagram illustrating a configuration of the voice call communication switching system according to the third embodiment;
FIG. 13 is a flowchart for describing a resource release instruction process performed by an application server apparatus according to the third embodiment;
FIG. 14 is a flowchart for describing a process of receiving a requested-process success notification in response to a resource release instruction, which is performed by the application server apparatus according to the third embodiment;
FIG. 15 is a diagram illustrating an example of the flow of control signals in a voice call communication switching system according to a fourth embodiment;
FIG. 16 is a diagram illustrating a configuration of the voice call communication switching system according to the fourth embodiment;
FIG. 17 is a flowchart for describing a resource release instruction process performed by a call control apparatus according to the fourth embodiment;
FIG. 18 is a flowchart for describing a process of receiving a requested-process success notification in response to a resource release instruction, which is performed by the call control apparatus according to the fourth embodiment;
FIG. 19 is a flowchart for describing a resource release instruction process performed by a call control apparatus according to a fifth embodiment;
FIG. 20 is a flowchart for describing a process of receiving a requested-process success notification from user equipment in response to a resource release instruction, which is performed by the call control apparatus according to the fifth embodiment;
FIG. 21 is a flowchart for describing a process of receiving a requested-process success notification from a control signal conversion apparatus in response to a resource release instruction, which is performed by the call control apparatus according to the fifth embodiment;
FIG. 22 is a diagram illustrating a configuration of a voice call communication switching system according to a sixth embodiment;
FIG. 23 is a flowchart for describing a resource release instruction process performed by a call control apparatus according to the sixth embodiment;
FIG. 24 is a flowchart for describing a process of receiving a requested-process success notification from user equipment in response to a resource release instruction, which is performed by the call control apparatus according to the sixth embodiment;
FIG. 25 is a flowchart for describing a process of receiving a requested-process success notification from a control signal conversion apparatus in response to a resource release instruction, which is performed by the call control apparatus according to the sixth embodiment;
FIG. 26 is a diagram illustrating a computer that executes a resource release instruction sending program;
FIG. 27 is a diagram illustrating a computer that executes a resource release instruction forwarding program;
FIG. 28 is a diagram illustrating an exemplary configuration of a voice call communication switching system according to a conventional technique;
FIG. 29 is a diagram illustrating an example of the flow of control signals in the voice call communication switching system according to the conventional technique;
FIG. 30 is a diagram illustrating an example of message information of a session end request "SIP:BYE" sent to an MGCF from an AS according to the conventional technique; and
FIG. 31 is a diagram illustrating an example of message information of a requested-process success notification "SIP: 200 OK" sent to the AS from the MGCF according to the conventional technique.

### DESCRIPTION OF EMBODIMENTS

Embodiments of a voice call communication switching system will be described in detail below with reference to the accompanying drawings.

### (First Embodiment)

### (Summary)

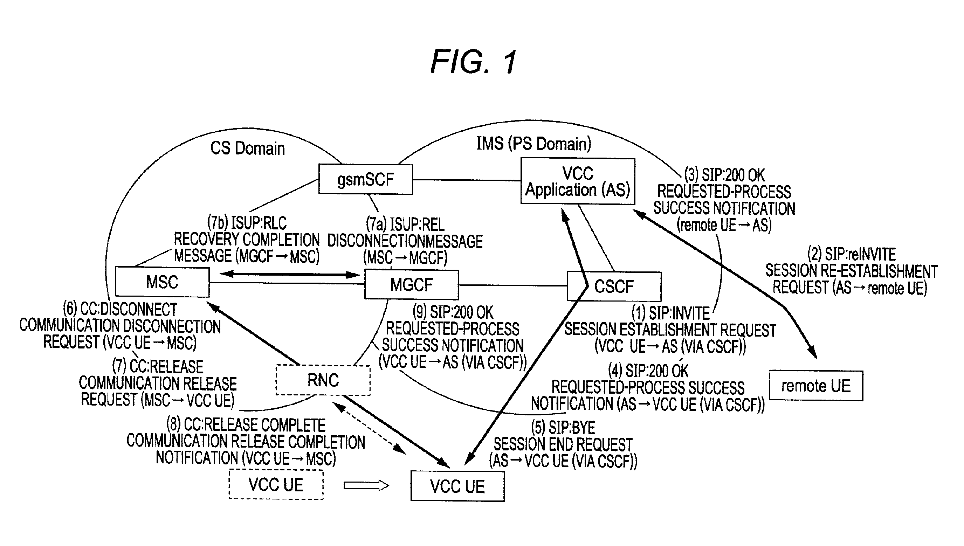

FIG. 1 is a diagram illustrating an example of the flow of control signals in a voice call communication switching system according to a first embodiment.

The voice call communication switching system communicably connects networks having different communication control protocols, i.e., a CS domain which is a circuit-switched network and a PS domain (IMS) which is an IP packet network. The voice call communication switching system provides a service for establishing communication between pieces of user equipment, such as mobile phones, using the networks or between user equipment and an information terminal, such as a personal computer (e.g., a VCC UE on the transmitter side and a remote UE on the receiver side).

In the CS domain, communication control between a VCC UE and a remote UE is performed by an MSC which is a service control node in the CS domain, via an RNC that performs communication control between the MSC and the VCC UE. In the PS domain, communication control between the VCC UE and the remote UE is performed by, for example, a CSCF that provides, for example, routing of SIP, which is a communication control protocol in the PS domain, authentication and authorization, which are basic services of IMS, and an AS (Application Server).

An MGCF disposed between the CS domain and the PS domain performs, for example, conversion or coordination of different communication control protocols between the CS domain (whose communication control protocol is ISUP) and the PS domain (whose communication control protocol is SIP). A gsmSCF provides supplementary service information in the CS domain. In practice, there are a plurality of one-to-one communications, each performed between the VCC UE and the remote UE.

In such a configuration, the voice call communication switching system has a first network and a second network communicably connected to each other and has user equipment that establishes communication using the networks; and a server apparatus that is provided in the second network and controls communication exchanged between the networks. The voice call communication switching system can perform quick release of resources.

The system will be specifically described. When the VCC UE transfers from the CS domain to the PS domain while communicating with the remote UE, the VCC UE sends a session establishment request "SIP:INVITE" to the AS in the PS domain to switch the communication path from the CS domain to the PS domain (see (1) of FIG. 1).

The AS having received the session establishment request from the VCC UE sends to the remote UE a session re-establishment request "SIP:reINVITE" for switching the communication control from the CS domain having been established up to this point to the PS domain (see (2) of FIG. 1). The remote UE having received the session re-establishment request from the AS sends to the AS a requested-process success notification "SIP:200 OK," which is a response to the received session re-establishment request (see (3) of FIG. 1).

Thereafter, the AS having received the requested-process success notification from the remote UE sends the requested-process success notification "SIP:200 OK" to the VCC UE (see (4) of FIG. 1). The AS having sent the requested-process success notification to the VCC UE sends to the VCC UE a session end request "SIP:BYE" to release resources having been used by the VCC UE in the CS domain (see (5) of FIG. 1).

The VCC UE having received the session end request from the AS sends, via the RNC, to the MSC a communication disconnection request "CC:DISCONNECT" to disconnect the communication of the VCC UE performed using the CS domain (to release the resources) (see (6) of FIG. 1). The MSC having received the communication disconnection request from the VCC UE sends to the VCC UE a communication release request "CC:RELEASE," which is a response to the communication disconnection request (see (7) of FIG. 1).

The MSC having received the communication disconnection request from the VCC UE sends to the MGCF a disconnection message "ISUP:Release Message (REL)" to release resources having been used between the MSC and the MGCF (see (7a) of FIG. 1). The MGCF having received the disconnection message sends to the MSC a recovery completion message "ISUP:Release Complete Message (RLC)" indicating that release of the resources (recovery of the resources) having been used between the MGCF and the MSC has been completed (see (7b) of FIG. 1).

The VCC UE having received the communication release request from the MSC sends to the MSC a communication release completion notification "CC:RELEASE COMPLETE" indicating that the communication has been released (the resources have been released) (see (8) of FIG. 1). The VCC UE having sent the communication release completion notification to the MSC sends to the AS a requested-process success notification "SIP:200 OK" which is a response to the session end request (see (9) of FIG. 1).

As such, when the voice call communication switching system according to the first embodiment has a first network and a second network communicably connected to each other and has user equipment that establishes communication using the networks; and a server apparatus that is provided in the second network and controls communication exchanged between the networks, the user equipment to which an instruction to release resources has been sent from an application server apparatus can exercise release of the resources; as a result, quick release of the resources can be performed.

Specifically, when the voice call communication switching system has a first network and a second network communicably connected to each other and has user equipment that establishes communication using the networks; and a server apparatus that is provided in the second network and controls communication exchanged between the networks, a resource release instruction is sent to a VCC UE which is the user equipment and the VCC UE performs release of resources; accordingly, the system can perform quicker release of the resources over systems according to conventional techniques.

### (Configuration of the voice call communication switching system according to the first embodiment)

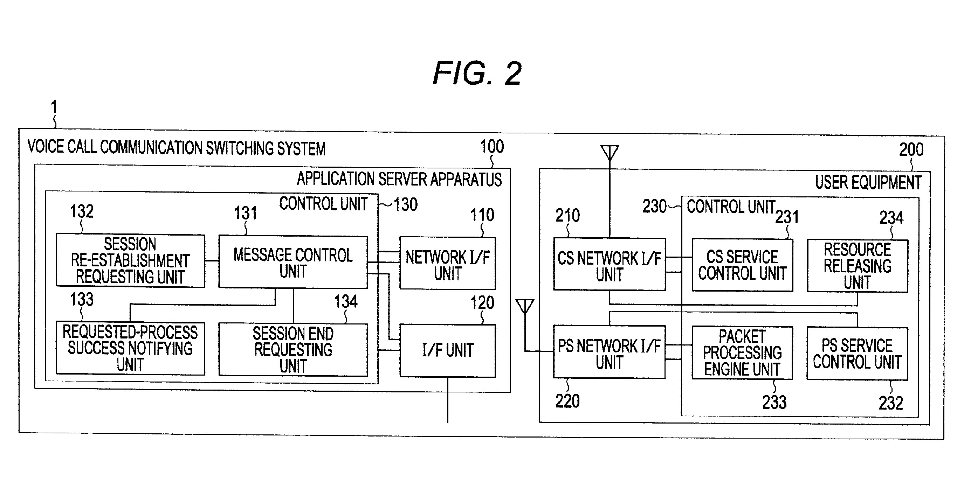

FIG. 2 is a diagram illustrating a configuration of the voice call communication switching system according to the first embodiment.

As illustrated in FIG. 2, a voice call communication switching system 1 includes an application server apparatus 100 and user equipment 200. The voice call communication switching system 1 communicably connects networks having different communication control protocols, i.e., a CS domain, which is a circuit-switched network, and a PS domain, which is an IP packet network, and provides a service for establishing communication between pieces of user equipment using the networks. The application server apparatus 100 has a network I/F (interface) unit 110, an I/F unit 120, and a control unit 130. The user equipment 200 has a CS network I/F unit 210, a PS network I/F unit 220, and a control unit 230.

The network I/F unit 110 controls wireless communication of various information exchanged with the user equipment 200, a base station, etc., via the Internet. For example, when the user equipment 200 performs communication with (makes a call to) another user equipment via the Internet, the network I/F unit 110 performs sending/receiving of data for the communication. For example, the network I/F unit 110 terminates L1, L2, and L3 (Physical Layer 1, Data Link Layer 2, Network Layer 3) protocols, which are unique to a network interface.

The I/F unit 120 controls wired communication of various information exchanged with an apparatus other than the application server apparatus 100 in the same network. For example, the I/F unit 120 controls, in the PS domain, which is an IP packet network, wired communication of various information exchanged between an MGCF that performs, for example, conversion or coordination of different communication control protocols between the CS domain and the PS domain, and a CSCF that provides, for example, routing of SIP, which is a communication control protocol in the PS domain, and authentication and authorization, which are basic services of IMS.

The control unit 130 has an internal memory for storing a control program, a program that specifies various processing steps, etc., and required data. The control unit 130 performs, for example, grasp management of a domain to which the user equipment 200 belongs and domain switching.

A message control unit 131 performs, when a domain to which the user equipment 200 belongs is switched to another, control of a message required to release resources of the domain having been used up to this point. The message control unit 131 performs control of various message information to be communicated with the application server apparatus 100.

Specifically, when the domain to which the user equipment 200 belongs is switched from the CS domain to the PS domain, the message control unit 131 receives a domain switching message from the user equipment 200. The message control unit 131 sends a session end request "SIP:BYE" message required to release resources of the CS domain having been used up to this point, to the user equipment 200 via the network I/F unit 110.

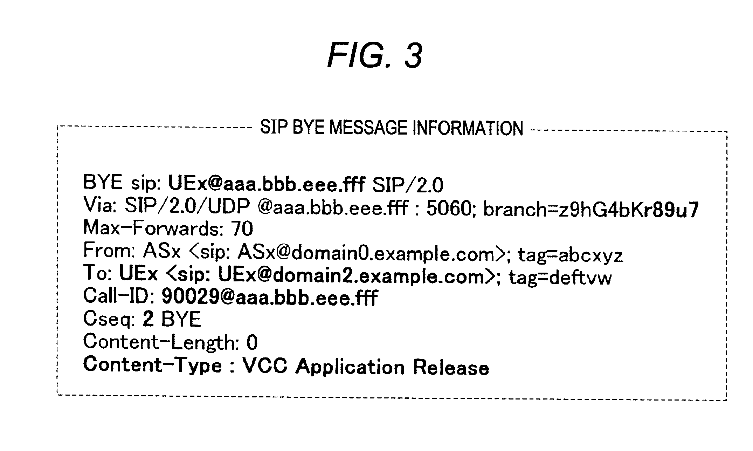

FIG. 3 is a diagram illustrating an example of message information of the session end request "SIP:BYE" sent to the user equipment 200 from the message control unit 131.

As illustrated in FIG. 3, the session end request "SIP:BYE" sent to the user equipment 200 from the message control unit 131 has information including "BYE sip" indicating the type and destination of the request; "Via" indicating the designation of a request responder; "Max-Forwards" indicating the maximum number of forwards allowed; "From" indicating the sender of the request; "To" indicating the destination of the request; "Call-ID" indicating a session identification ID; "Cseq" indicating a command sequence number and a method; "Content-Length" indicating message body size; and "Content-Type" indicating that this is a signal for requesting to release resources.

Comparing the "SIP:BYE" message sent to the MGCF from the AS according to the conventional technique illustrated in FIG. 30 with the "SIP:BYE" message sent to the VCC UE from the AS according to the example illustrated in FIG. 3, the messages are different mainly in content of "BYE sip", "Via", "To", "Call-ID", and "Cseq", such as a destination associated with sending of the message. Also, it can be seen that the message according to the example has added thereto "Content-Type" for recognizing that resources are released (this is a resource release instruction signal).

A session re-establishment requesting unit 132 requests, when the user equipment 200 transfers from the circuit-switched network to the IP packet network and accordingly the session re-establishment requesting unit 132 receives from the user equipment 200 a message indicating switching of communication control, the message control unit 131 to send a message for switching to the communication control of the IP packet network to user equipment, which is a communication partner of the user equipment 200.

Specifically, when the user equipment 200 transfers from the CS domain, which is a circuit-switched network, to the PS domain, which is an IP packet network, the session re-establishment requesting unit 132 receives from the user equipment 200 a session establishment request "SIP:INVITE," which is a message indicating switching of communication control. The session re-establishment requesting unit 132 requests the message control unit 131 to send a session re-establishment request "SIP:reINVITE," which is a message for switching to the communication control of the PS domain, to user equipment, which is a communication partner of the user equipment 200.

A requested-process success notifying unit 133 receives a response message from the communication partner of the user equipment 200 having received the message indicating switching of communication control, which is sent from the message control unit 131. The requested-process success notifying unit 133 requests the message control unit 131 to send the response message to the user equipment 200.

Specifically, the requested-process success notifying unit 133 receives a requested-process success notification "SIP:200 OK," which is a response message from the communication partner of the user equipment 200 having received the session re-establishment request "SIP:reINVITE," which is a message indicating switching of communication control from the CS domain to the PS domain and which is sent from the message control unit 131. The requested-process success notifying unit 133 requests the message control unit 131 to send the received requested-process success notification "SIP:200 OK" to the user equipment 200.

When the response message from the communication partner of the user equipment 200 is sent to the user equipment 200 from the message control unit 131, a session end requesting unit 134 requests the message control unit 131 to send to the user equipment 200 an instruction message to release resources of the circuit-switched network having been used by the user equipment 200.

Specifically, when a requested-process success notification "SIP:200 OK," which is a response message from the communication partner of the user equipment 200 is sent to the user equipment 200 from the message control unit 131, the session end requesting unit 134 requests the message control unit 131 to send to the user equipment 200 a session end request "SIP:BYE," which is an instruction message to release resources of the CS domain, which is a circuit-switched network, having been used by the user equipment 200.

The CS network I/F unit 210 controls wireless communication of various information exchanged between the user equipment 200 that performs communication via the circuit-switched network and another user equipment. For example, when communication is performed (a call is made) between the user equipment 200 and another user equipment via the CS domain, which is a circuit-switched network, the CS network I/F unit 210 performs sending/receiving of data for the communication. For example, the CS network I/F unit 210 terminates L1, L2, and L3 protocols, which are unique to a network interface.

The PS network I/F unit 220 controls wireless communication of various information exchanged between the user equipment 200 that performs communication via the IP packet network and another user equipment. For example, when communication is performed (a call is made) between the user equipment 200 that performs communication (makes a call) via the PS domain, which is an IP packet network, and another user equipment, the PS network I/F unit 220 performs sending/receiving of data for the communication. For example, the PS network I/F unit 220 terminates L1, L2, and L3 protocols, which are unique to a network interface.

The control unit 230 has an internal memory for storing a control program, a program that specifies various processing steps, etc., and required data. Also, the control unit 230 performs, for example, termination of a control message that communicates with a network (e.g., a circuit-switched network or IP packet network) for performing mobile communication or domain switching of the user equipment 200.

A CS service control unit 231 controls, for example, the setting of a communication path or transfer management of the user equipment 200 in the circuit-switched network. For example, when communication is performed between the user equipment 200 and another user equipment (communication partner) via the CS domain, which is a circuit-switched network, the CS service control unit 231 performs the setting of a communication path. For example, when the user equipment 200 transfers from the PS domain to the CS domain, the CS service control unit 231 controls transfer management for switching to communication performed via the CS domain.

A PS service control unit 232 controls, for example, the setting of a communication path or transfer management of the user equipment 200 in the IP packet network. For example, when communication is performed between the user equipment 200 and another user equipment (communication partner) via the PS domain which is an IP packet network, the PS service control unit 232 performs the setting of a communication path. For example, when the user equipment 200 transfers from the CS domain to the PS domain, the PS service control unit 232 sends to the application server apparatus 100 a session establishment request "SIP:INVITE," which is a message for switching to communication performed via the PS domain.

A packet processing engine unit 233 connects to a network and identifies a communication path to the network and performs data routing based on bearer settings. For example, the packet processing engine unit 233 connects to the PS domain, which is an IP packet network, and identifies a communication path to the PS domain. Then, based on bearer settings--where without identifying content of received data, the data is transmitted to a sending destination as it is--the packet processing engine unit 233 performs routing of the data.

A resource releasing unit 234 sends, when receiving from the application server apparatus 100 a message instructing to release resources of a network, a message for disconnecting communication with the network having been used by the user equipment 200 up to this point, to the network.

Specifically, the resource releasing unit 234 receives from the application server apparatus 100 a session end request "SIP:BYE," which is a message instructing to release resources of the CS domain, which is a circuit-switched network. Then, the resource releasing unit 234 sends a communication disconnection request "CC:DISCONNECT," which is a message indicating release of the resources of the CS domain having been used by the user equipment 200 up to this point, to a node (e.g., an MSC) that controls the CS domain.

Also, when the resource releasing unit 234 receives a message indicating that the resources have been released, from the node that controls the network whose resources have been released, the resource releasing unit 234 sends a message indicating that a resource release process has been completed, to the application server apparatus 100 that has instructed to release the resources.

Specifically, the resource releasing unit 234 receives a communication release completion notification "CC:RELEASE COMPLETE" indicating that a resource release process has been completed, from the MSC that controls the CS domain. Then, the resource releasing unit 234 sends a requested-process success notification "SIP:200 OK," which is a response message to the instruction to release the resources, to the application server apparatus 100 that has instructed to release the resources.

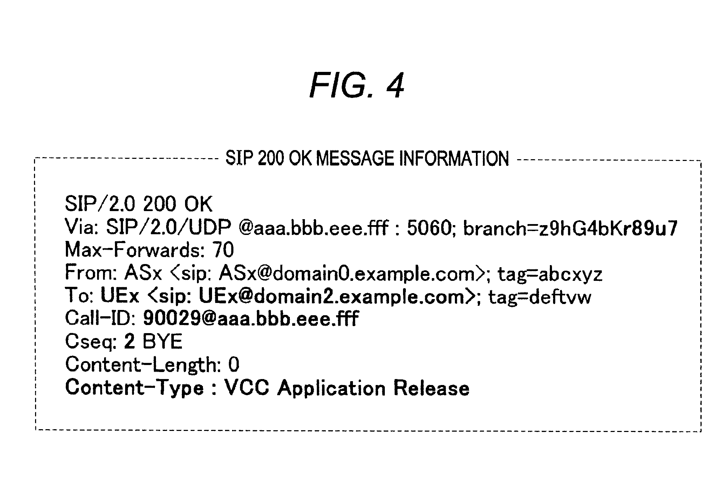

FIG. 4 is a diagram illustrating an example of message information of the requested-process success notification "SIP:200 OK" sent to the application server apparatus 100 from the resource releasing unit 234.

As illustrated in FIG. 4, the requested-process success notification "SIP:200 OK" sent to the application server apparatus 100 from the resource releasing unit 234 has information including "SIP/2.0 200 OK" indicating the type and destination of the SIP response; "Via" indicating the designation of a responder to a SIP request; "Max-Forwards" indicating the maximum number of forwards allowed; "From" indicating the sender of the SIP request; "To" indicating the destination of the SIP request; "Call-ID" indicating a session identification ID; "Cseq" indicating a command sequence number and a method; "Content-Length" indicating message body size; and "Content-Type" indicating that this is a response signal to a resource release request.

Comparing the "SIP:200 OK" message sent to the AS from the MGCF according to the conventional technique illustrated in FIG. 31 with the "SIP:200 OK" message sent to the AS from the VCC UE according to the example illustrated in FIG. 4, the messages are different mainly in content of "Via", "To", "Call-ID", and "Cseq", such as a destination associated with sending of the message. Also, it can be seen that the message according to the example has added thereto "Content-Type" for recognizing that resources have been released (this is a resource release instruction response signal).

### (Resource release instruction process according to the first embodiment)

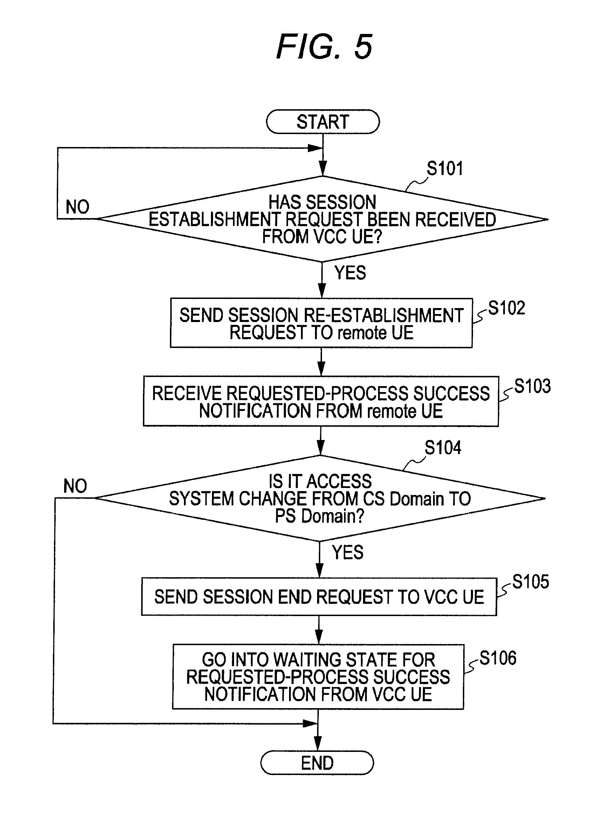

FIG. 5 is a flowchart for describing a resource release instruction process performed by the application server apparatus 100 according to the first embodiment.

As illustrated in FIG. 5, when, while the user equipment 200 (VCC UE) communicates with another user equipment (remote UE) using resources of the CS domain, the user equipment 200 goes into a situation where the user equipment 200 communicates with this another user equipment using resources of the PS domain, if the application server apparatus 100 receives a session establishment request "SIP:INVITE," which is a message indicating switching of the communication from the CS domain to the PS domain and which is sent from the user equipment 200 (Yes at step S101), then the application server apparatus 100 sends to the remote UE a session re-establishment request "SIP:reINVITE" for switching from the resources of the CS domain having been used up to this point to the resources of the PS domain (step S102).

The application server apparatus 100 receives from the remote UE a requested-process success notification "SIP:200 OK," which is a response to the sent session re-establishment request "SIP:reINVITE" (step S103). The application server apparatus 100 having received the requested-process success notification "SIP:200 OK" sends the requested-process success notification "SIP:200 OK" to the user equipment 200.

The application server apparatus 100 determines whether the session establishment request "SIP:INVITE" received from the user equipment 200 is an access system change from the CS domain to the PS domain (step S104). If the application server apparatus 100 determines that the request is an access system change from the CS domain to the PS domain (Yes at step S104), then the application server apparatus 100 sends to the user equipment 200 a session end request "SIP:BYE," which is a resource release instruction to release the resources having been used by the user equipment 200 in the CS domain (step S105).

Then, the application server apparatus 100 having sent to the user equipment 200 the session end request "SIP:BYE," which is a resource release instruction, goes into a waiting state for receiving a requested-process success notification "SIP:200 OK," which is a response message to the session end request (step S106). Note that if, at step S104, the application server apparatus 100 determines that the request is not an access system change from the CS domain to the PS domain (No at step S104), then the application server apparatus 100 performs a normal resource release process in the PS domain and then ends the process.

(Process of receiving a requested-process success notification in response to a resource release instruction according to the first embodiment)

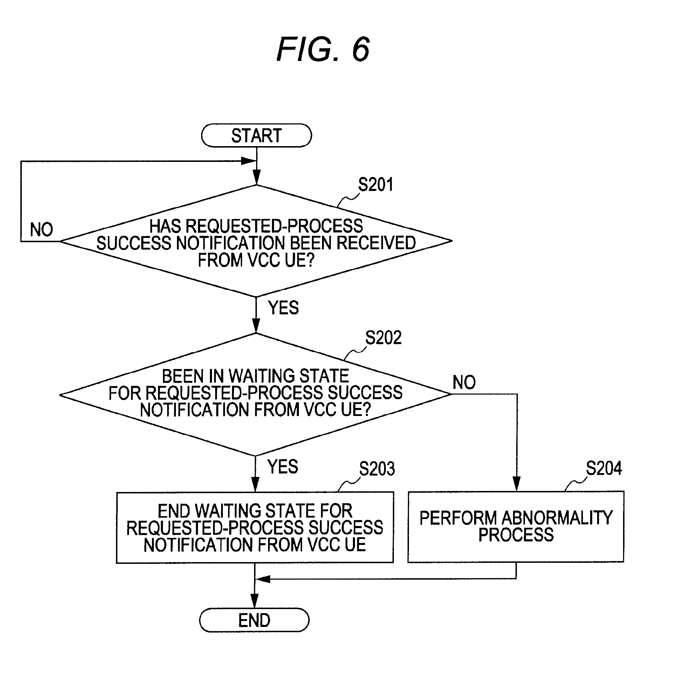

FIG. 6 is a flowchart for describing a process of receiving a requested-process success notification in response to a resource release instruction, which is performed by the application server apparatus 100 according to the first embodiment.

As illustrated in FIG. 6, when the application server apparatus 100 receives a requested-process success notification "SIP:200 OK" from the user equipment 200 (Yes at step S201), the application server apparatus 100 determines whether the application server apparatus 100 has been in a waiting state for a requested-process success notification from the user equipment 200 that has sent the requested-process success notification "SIP:200 OK" (step S202).

If the application server apparatus 100 has been in a waiting state for a requested-process success notification from the user equipment 200 that has sent the requested-process success notification "SIP:200 OK" (Yes at step S202), then the application server apparatus 100 ends the waiting state for a requested-process success notification from the user equipment 200 (step S203). Note that if, at step S202, the application server apparatus 100 has not been in a waiting state for a requested-process success notification from the user equipment 200 that has sent the requested-process success notification "SIP:200 OK" (No at step S202), then the application server apparatus 100 performs an abnormality process such as saving, as a log, abnormality indicating that the application server apparatus 100 has received the requested-process success notification "SIP:200 OK" despite the fact that the application server apparatus 100 has not been in a waiting state for such a notification (step S204).

### (Resource release process according to the first embodiment)

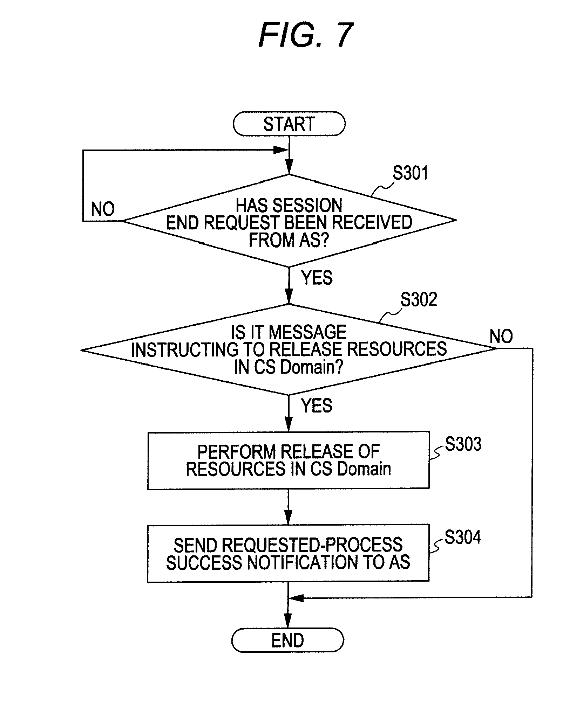

FIG. 7 is a flowchart for describing a resource release process performed by the user equipment 200 according to the first embodiment.

As illustrated in FIG. 7, when the user equipment 200 receives a session end request "SIP:BYE" from the application server apparatus 100 (Yes at step S301), the user equipment 200 determines whether the request is a session end request "SIP:BYE," which is a message instructing to release resources in the CS domain having been used by the user equipment 200 (step S302).

If the user equipment 200 determines that the session end request "SIP:BYE" received from the application server apparatus 100 is a session end request "SIP:BYE," which is a message instructing to release the resources in the CS domain (Yes at step S302), then the user equipment 200 sends to the MSC a communication disconnection request "CC:DISCONNECT," which is a message indicating that release of the resources in the CS domain is to be performed (step S303).

When the resources have been released in the CS domain by the MSC, the MGCF, etc., and accordingly, the user equipment 200 receives a communication release completion notification "CC:RELEASE COMPLETE" from the MSC, the user equipment 200 sends to the application server apparatus 100 a requested-process success notification "SIP:200 OK," which is a response message to the session end request "SIP:BYE" (step S304).

### (Effect provided by the first embodiment)

As such, according to the first embodiment, a voice call communication switching system has a first network and a second network communicably connected to each other and has user equipment that establishes communication using the networks; and a server apparatus that is provided in the second network and controls communication exchanged between the networks. An application server apparatus receives a message sent from the user equipment to switch communication from the first network to the second network. The message is sent from the user equipment when the situation is changed from one where the user equipment communicates with another user equipment using resources of the first network to another where the user equipment communicates with this another user equipment using resources of the second network. When the application server apparatus receives the message, the application server apparatus sends to the user equipment a resource release instruction to disconnect the communication between the first network and the user equipment. When the user equipment receives the sent resource release instruction, the user equipment releases the resources having been used in the first network. According to the first embodiment, the voice call communication switching system can perform quick release of resources.

Namely, in the voice call communication switching system, the application server apparatus provides the user equipment with a resource release instruction, and the user equipment having received the resource release instruction exercises release of resources. By this, the system can perform quicker release of the resources over systems according to conventional techniques, in which due to a resource release request made to an apparatus (e.g., an MGCF) that is provided between a first network and a second network and performs control to communicably connect the networks, the MGCF is congested.

For example, the application server apparatus 100 receives a session establishment request "SIP:INVITE," which is a message to be sent from the user equipment 200 to switch communication from the CS domain to the PS domain, and which is a message to be sent from the user equipment 200 when the situation is changed from one where the user equipment 200 communicates with another user equipment using resources of the CS domain to another where the user equipment 200 communicates with this another user equipment using resources of the PS domain. When the application server apparatus 100 receives the session establishment request "SIP:INVITE," which is a message sent from the user equipment 200, the application server apparatus 100 sends to the user equipment 200 a session end request "SIP:BYE" instructing to disconnect the communication between the CS domain and the user equipment 200. When the user equipment 200 receives the session end request "SIP:BYE" sent from the application server apparatus 100, the user equipment 200 sends to the MSC in the CS domain a communication disconnection request "CC:DISCONNECT," which is a message indicating release of resources having been used in the CS domain. The MSC, having received the communication disconnection request from the user equipment 200, releases the resources having been used by apparatuses, such as the user equipment 200 and the MGCF. As a result, the voice call communication switching system 1 can perform quick release of the resources.

### (Second Embodiment)

The first embodiment describes the case in which a resource release instruction is sent to user equipment 200 and the user equipment 200 exercises release of resources. However, the system is not limited thereto and it is also possible to send a resource release instruction to each of the user equipment 200 and a control signal conversion apparatus (MGCF) that performs control to communicably connect a CS domain to a PS domain, and exercise release of resources by each apparatus.

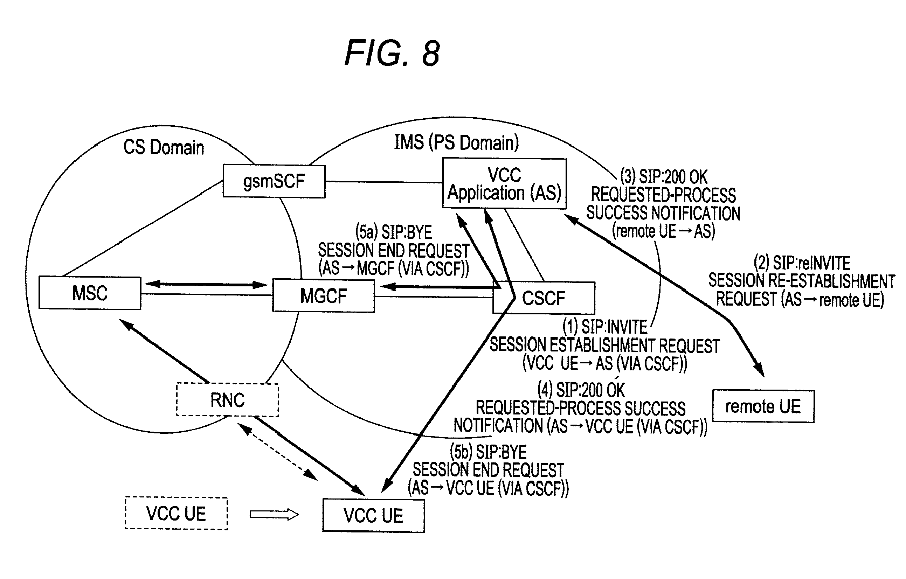

FIG. 8 is a diagram illustrating an example of the flow of control signals in a voice call communication switching system according to a second embodiment. Each configuration and some functions of the voice call communication switching system according to the second embodiment are the same as those according to the first embodiment and thus description thereof is omitted here, and a resource release instruction, which is the difference between the first embodiment and the second embodiment, will be described.

### (Summary of the second embodiment)

As illustrated in FIG. 8, when a VCC UE transfers from a CS domain to a PS domain while communicating with a remote UE, the VCC UE sends a session establishment request "SIP:INVITE" to an AS in the PS domain to switch the communication path from the CS domain to the PS domain (see (1) of FIG. 8).

The AS having received the session establishment request from the VCC UE sends to the remote UE a session re-establishment request "SIP:reINVITE" for switching communication control from the CS domain having been established up to this point to the PS domain (see (2) of FIG. 8). The remote UE having received the session re-establishment request from the AS sends to the AS a requested-process success notification "SIP:200 OK," which is a response to the received session re-establishment request (see (3) of FIG. 8).

The AS having received the requested-process success notification from the remote UE sends the requested-process success notification "SIP:200 OK" to the VCC UE (see (4) of FIG. 8). The AS having sent the requested-process success notification to the VCC UE sends a session end request "SIP:BYE" to a control signal conversion apparatus (MGCF)(see (5a) of FIG. 8) and also to the VCC UE (see (5b) of FIG. 8) to release resources having been used by the VCC UE in the CS domain.

The MGCF having received the session end request performs its process to release the resources having been used by the VCC UE in the CS domain. The VCC UE having received the session end request performs the same process as that performed in the first embodiment to release the resources having been used by the VCC UE in the CS domain. The MGCF or the VCC UE having performed the release of the resources sends a requested-process success notification "SIP:200 OK" to the AS.

Namely, in the voice call communication switching system according to the second embodiment, a resource release instruction is sent to both the VCC UE and the MGCF and either the VCC UE or the MGCF performs release of resources, and thus, quicker release of the resources can be performed.

### (Resource release instruction process according to the second embodiment)

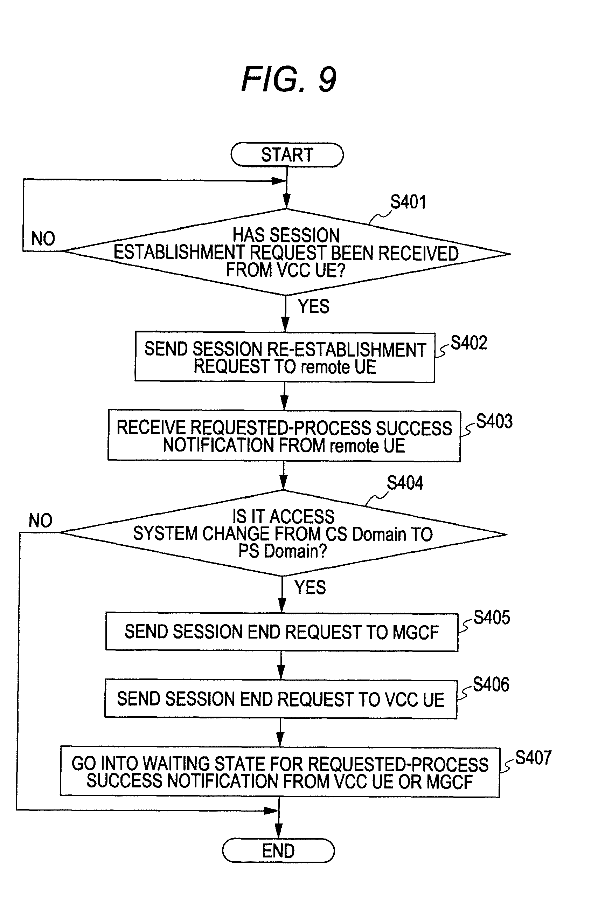

FIG. 9 is a flowchart for describing a resource release instruction process performed by an application server apparatus 100 according to the second embodiment.

As illustrated in FIG. 9, when, while user equipment 200 (VCC UE) communicates with another user equipment (remote UE) using resource of the CS domain, the user equipment 200 goes into a situation where the user equipment 200 communicates with this another user equipment using resources of the PS domain, if the application server apparatus 100 receives from the user equipment 200 a session establishment request "SIP:INVITE," which is a message indicating switching of the communication from the CS domain to the PS domain (Yes at step S401), then the application server apparatus 100 sends to the remote UE a session re-establishment request "SIP:reINVITE" for switching from the resources of the CS domain having been used up to this point to the resources of the PS domain (step S402).

The application server apparatus 100 receives from the remote UE a requested-process success notification "SIP:200 OK," which is a response to the sent session re-establishment request "SIP:reINVITE" (step S403). The application server apparatus 100, having received the requested-process success notification "SIP:200 OK," sends the requested-process success notification "SIP:200 OK" to the user equipment 200.

The application server apparatus 100 determines whether the session establishment request "SIP:INVITE" received from the user equipment 200 is an access system change from the CS domain to the PS domain (step S404). If the application server apparatus 100 determines that the request is an access system change from the CS domain to the PS domain (Yes at step S404), then the application server apparatus 100 sends to the MGCF (control signal conversion apparatus) and the user equipment 200 a session end request "SIP:BYE," which is a resource release instruction to release the resources having been used by the user equipment 200 in the CS domain (steps S405 and S406).

The application server apparatus 100 having sent to the MGCF and the user equipment 200 the session end request "SIP:BYE," which is a resource release instruction, goes into a waiting state for receiving a requested-process success notification "SIP:200 OK," which is a response message to the session end request (step S407). Note that if, at step S404, the application server apparatus 100 determines that the request is not an access system change from the CS domain to the PS domain (No at step S404), then the application server apparatus 100 performs a normal resource release process in the PS domain and then ends the process.

### (Process of receiving a requested-process success notification in response to a resource release instruction according to the second embodiment)

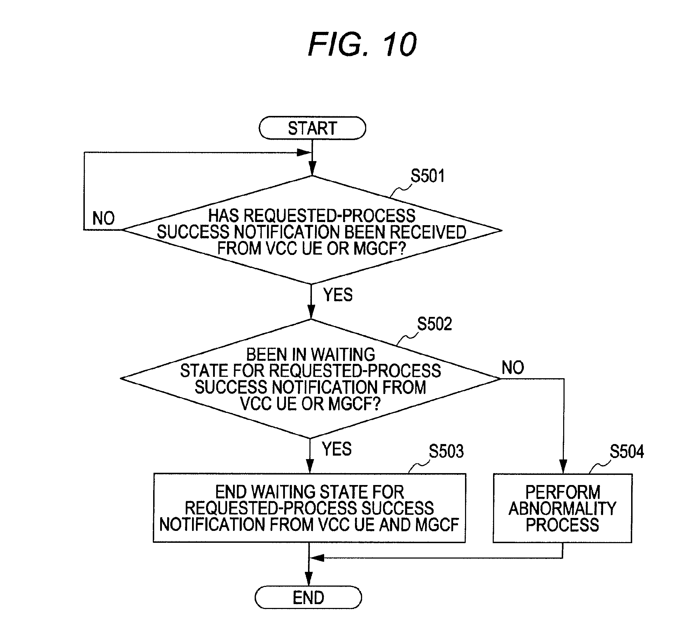

FIG. 10 is a flowchart for describing a process of receiving a requested-process success notification in response to a resource release instruction, which is performed by the application server apparatus 100 according to the second embodiment.

As illustrated in FIG. 10, when the application server apparatus 100 receives a requested-process success notification "SIP:200 OK" from the user equipment 200 or the MGCF (Yes at step S501), the application server apparatus 100 determines whether the application server apparatus 100 has been in a waiting state for a requested-process success notification from the user equipment 200 or the MGCF that has sent the requested-process success notification "SIP:200 OK" (step S502).

If the application server apparatus 100 has been in a waiting state for a requested-process success notification from the user equipment 200 or the MGCF that has sent the requested-process success notification "SIP:200 OK" (Yes at step S502), then the application server apparatus 100 ends the waiting state for a requested-process success notification from the user equipment 200 and the MGCF (step S503).

Note that if, at step S502, the application server apparatus 100 has not been in a waiting state for a requested-process success notification from the user equipment 200 or the MGCF that has sent the requested-process success notification "SIP:200 OK" (No at step S502), then the application server apparatus 100 performs an abnormality process such as saving, as a log, abnormality indicating that the application server apparatus 100 has received the requested-process success notification "SIP:200 OK" despite the fact that the application server apparatus 100 has not been in a waiting state for such a notification (step S504).

### (Effect provided by the second embodiment)

As such, according to the second embodiment, in the voice call communication switching system, an instruction to release resources is sent not only to the user equipment 200 but also to the control signal conversion apparatus, and the user equipment 200 and the control signal conversion apparatus that have received the instruction to release resources exercise release of the resources, and thus, the resources can be more quickly released.

### (Third Embodiment)

The second embodiment describes the case in which regardless of whether a control signal conversion apparatus (MGCF) is congested or not, an instruction to release resources is sent to the control signal conversion apparatus and user equipment 200. However, the system is not limited thereto and it is also possible to send an instruction to release resources to the user equipment 200 when the control signal conversion apparatus is congested and send an instruction to release resources to the control signal conversion apparatus when the control signal conversion apparatus is not congested.

### (Summary of the third embodiment)

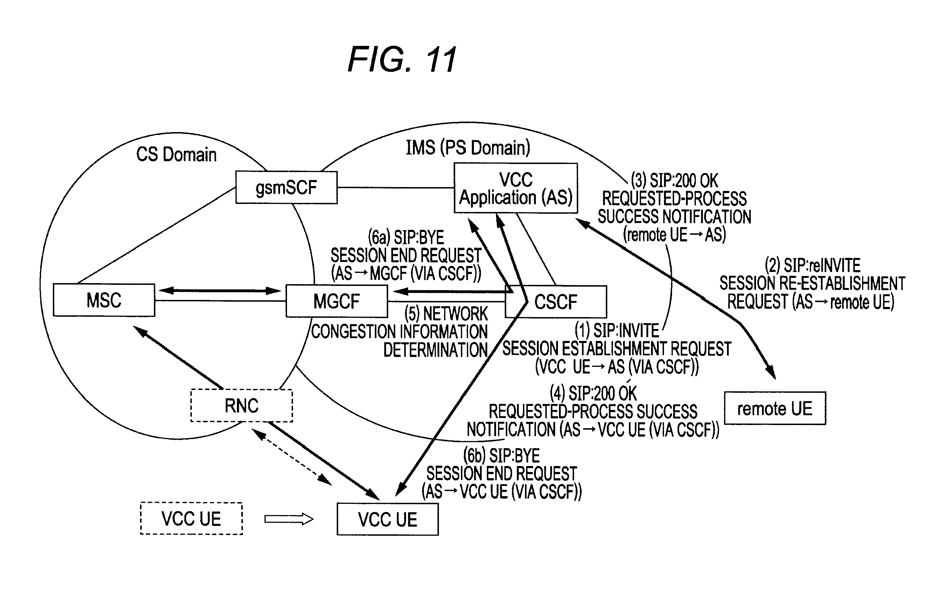

FIG. 11 is a diagram illustrating an example of the flow of control signals in a voice call communication switching system according to the third embodiment. Some configurations, functions, etc., of the voice call communication switching system 1 according to the third embodiment are the same as those according to the first embodiment and thus description thereof is omitted here and determination of congestion information and a resource release instruction, which are the differences between the first embodiment and the third embodiment, will be described.

As illustrated in FIG. 11, when a VCC UE transfers from a CS domain to a PS domain while communicating with a remote UE, the VCC UE sends a session establishment request "SIP:INVITE" to an AS in the PS domain to switch the communication path from the CS domain to the PS domain (see (1) of FIG. 11).

The AS having received the session establishment request from the VCC UE sends to the remote UE a session re-establishment request "SIP:reINVITE" for switching communication control from the CS domain having been established up to this point to the PS domain (see (2) of FIG. 11). The remote UE having received the session re-establishment request from the AS sends to the AS a requested-process success notification "SIP:200 OK" which is a response to the received session re-establishment request (see (3) of FIG. 11).

The AS having received the requested-process success notification from the remote UE sends the requested-process success notification "SIP:200 OK" to the VCC UE (see (4) of FIG. 11). The AS having sent the requested-process success notification to the VCC UE determines whether a control signal is congested in a control signal conversion apparatus (MGCF) that performs control to communicably connect the CS domain to the PS domain (see (5) of FIG. 11).

When the AS having determined whether a control signal is congested in the MGCF determines that a control signal is not congested in the MGCF, the AS sends a session end request "SIP:BYE" to the control signal conversion apparatus (MGCF) to release resources having been used by the VCC UE in the CS domain (see (6a) of FIG. 11).

The MGCF having received the session end request performs its process to release the resources having been used by the VCC UE in the CS domain. Thereafter, the MGCF having performed the release of the resources sends a requested-process success notification "SIP:200 OK" to the AS.

On the other hand, when the AS having determined whether a control signal is congested in the MGCF determines that a control signal is congested in the MGCF, the AS sends a session end request "SIP:BYE" to the VCC UE to release resources having been used by the VCC UE in the CS domain (see (6b) of FIG. 11).

The VCC UE having received the session end request performs the same process as that performed in the first embodiment to release the resources having been used by the VCC UE in the CS domain. Thereafter, the VCC UE having performed the release of the resources sends a requested-process success notification "SIP:200 OK" to the AS.

Namely, in the voice call communication switching system according to the third embodiment, when the MGCF is congested, a resource release instruction is sent to the VCC UE and when the MGCF is not congested, a resource release instruction is sent to the MGCF, and either the VCC UE or the MGCF performs release of resources. Accordingly, without aggravating the congestion of the MGCF, quicker release of the resources can be performed.

### (Configuration of the voice call communication switching system according to the third embodiment)

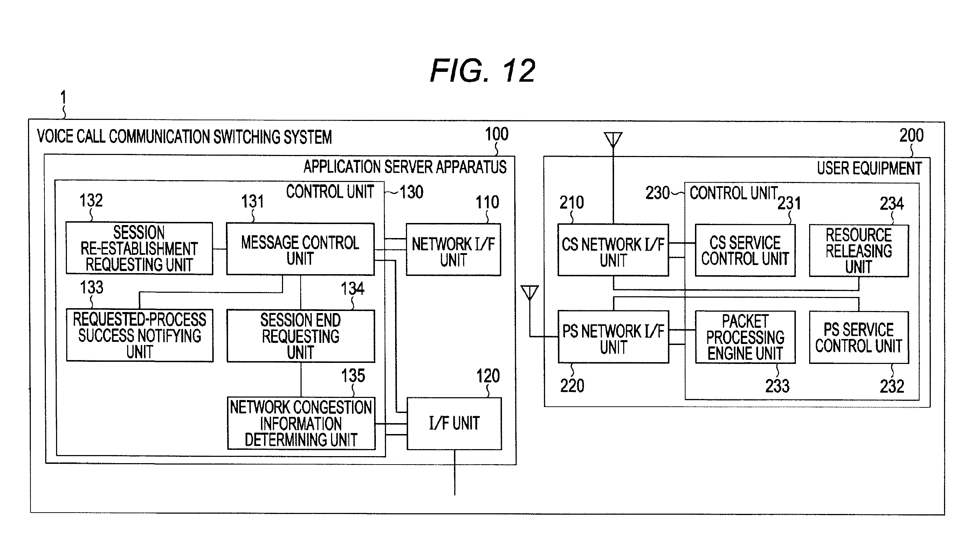

FIG. 12 is a diagram illustrating a configuration of the voice call communication switching system 1 according to the third embodiment. In the third embodiment, as described above, a network congestion information determining unit 135 that determines whether the MGCF is congested and a session end requesting unit 134 that instructs to release resources, which are the differences between the first embodiment and the third embodiment, will be described.

When a response message from a communication partner of user equipment 200 is sent to the user equipment 200 from a message control unit 131, the network congestion information determining unit 135 determines whether a control signal is congested in a control signal conversion apparatus that is provided between a circuit-switched network and an IP packet network and that performs control to communicably connect the circuit-switched network to the IP packet network.

Specifically, when a requested-process success notification "SIP:200 OK," which is a response message from a communication partner of the user equipment 200 is sent to the user equipment 200 from the message control unit 131, the network congestion information determining unit 135 determines whether an MGCF (control signal conversion apparatus) that is provided between a CS domain and a PS domain and that performs control to communicably connect the CS domain to the PS domain is congested.

When the network congestion information determining unit 135 determines that a control signal is congested in the control signal conversion apparatus, the session end requesting unit 134 sends to the user equipment 200 a resource release instruction to disconnect communication between the circuit-switched network and the user equipment 200.

Specifically, when the network congestion information determining unit 135 determines that a control signal is congested in the MGCF, the session end requesting unit 134 requests the message control unit 131 to send to the user equipment 200 a session end request "SIP:BYE," which is an instruction message for releasing resources of the CS domain which is a circuit-switched network having been used by the user equipment 200.

On the other hand, when the network congestion information determining unit 135 determines that a control signal is not congested in the control signal conversion apparatus, the session end requesting unit 134 sends to the control signal conversion apparatus a resource release instruction to disconnect communication between the circuit-switched network and the user equipment 200.

Specifically, when the network congestion information determining unit 135 determines that a control signal is not congested in the MGCF, the session end requesting unit 134 requests the message control unit 131 to send to the MGCF (control signal conversion apparatus) a session end request "SIP:BYE," which is an instruction message for releasing resources of the CS domain which is a circuit-switched network having been used by the user equipment 200.

### (Resource release instruction process according to the third embodiment)

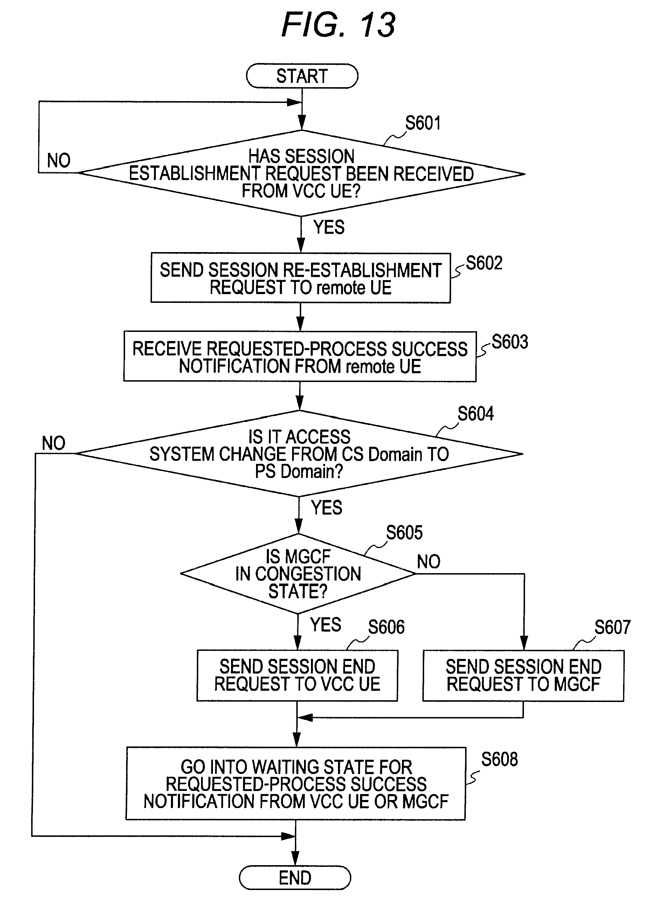

FIG. 13 is a flowchart for describing a resource release instruction process performed by the application server apparatus 100 according to the third embodiment.

As illustrated in FIG. 13, when, while the user equipment 200 (VCC UE) communicates with another user equipment (remote UE) using resource of the CS domain, the user equipment 200 goes into a situation where the user equipment 200 communicates with this another user equipment using resources of the PS domain, if the application server apparatus 100 receives from the user equipment 200 a session establishment request "SIP:INVITE," which is a message indicating switching of the communication from the CS domain to the PS domain (Yes at step S601), then the application server apparatus 100 sends to the remote UE a session re-establishment request "SIP:reINVITE" for switching from the resources of the CS domain having been used up to this point to the resources of the PS domain (step S602).

The application server apparatus 100 receives from the remote UE a requested-process success notification "SIP:200 OK," which is a response to the sent session re-establishment request "SIP:reINVITE" (step S603). The application server apparatus 100 having received the requested-process success notification "SIP:200 OK" sends the requested-process success notification "SIP:200 OK" to the user equipment 200.

The application server apparatus 100 determines whether the session establishment request "SIP:INVITE" received from the user equipment 200 is an access system change from the CS domain to the PS domain (step S604). If the application server apparatus 100 determines that the request is an access system change from the CS domain to the PS domain (Yes at step S604), then the application server apparatus 100 determines whether a control signal in the MGCF is in a congestion state (step S605).

If the application server apparatus 100 determines that a control signal in the MGCF is in a congestion state (Yes at step S605), then the application server apparatus 100 sends to the user equipment 200 a session end request "SIP:BYE," which is a resource release instruction to release the resources having been used by the user equipment 200 in the CS domain (step S606).

If the application server apparatus 100 determines that a control signal in the MGCF is not in a congestion state (No at step S605), then the application server apparatus 100 sends to the MGCF a session end request "SIP:BYE," which is a resource release instruction to release the resources having been used by the user equipment 200 in the CS domain (step S607).

The application server apparatus 100 having sent to the user equipment 200 or the MGCF the session end request "SIP:BYE," which is a resource release instruction, goes into a waiting state for receiving a requested-process success notification "SIP:200 OK," which is a response message to the session end request (step S608). Note that if, at step S604, the application server apparatus 100 determines that the request is not an access system change from the CS domain to the PS domain (No at step S604), then the application server apparatus 100 performs a normal resource release process in the PS domain and then ends the process.

### (Process of receiving a requested-process success notification in response to a resource release instruction according to the third embodiment)

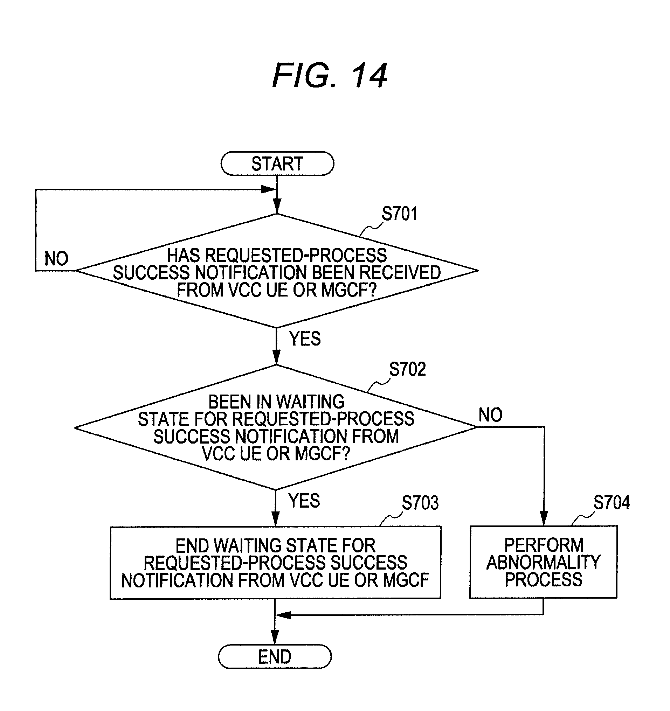

FIG. 14 is a flowchart for describing a process of receiving a requested-process success notification in response to a resource release instruction, which is performed by the application server apparatus 100 according to the third embodiment.

As illustrated in FIG. 14, when the application server apparatus 100 receives a requested-process success notification "SIP:200 OK" from the user equipment 200 or the MGCF (Yes at step S701), the application server apparatus 100 determines whether the application server apparatus 100 has been in a waiting state for a requested-process success notification from the user equipment 200 or the MGCF that has sent the requested-process success notification "SIP:200 OK" (step S702).

If the application server apparatus 100 has been in a waiting state for a requested-process success notification from the user equipment 200 or the MGCF that has sent the requested-process success notification "SIP:200 OK" (Yes at step S702), then the application server apparatus 100 ends the waiting state for a requested-process success notification from the user equipment 200 or the MGCF (step S703).

Note that if, at step S702, the application server apparatus 100 has not been in a waiting state for a requested-process success notification from the user equipment 200 or the MGCF that has sent the requested-process success notification "SIP:200 OK" (No at step S702), then the application server apparatus 100 performs an abnormality process such as saving, as a log, abnormality indicating that the application server apparatus 100 has received the requested-process success notification "SIP:200 OK" despite the fact that the application server apparatus 100 has not been in a waiting state for such a notification (step S704).

### (Effect provided by the third embodiment)

As such, according to the third embodiment, in the voice call communication switching system 1, an instruction to release resources is sent to the user equipment 200 when the MGCF is congested, and is sent to the MGCF when the MGCF is not congested. Accordingly, without aggravating the congestion of the MGCF, the resources can be more quickly released.

### (Fourth Embodiment)

The first to third embodiments describe the case in which an instruction to release resources is sent from an application server apparatus 100. However, the system is not limited thereto and it is also possible to send an instruction to release resources from a call control apparatus that is connected to the application server apparatus 100 and controls routing of a communication control message exchanged between a CS domain and a PS domain.

### (Summary of the fourth embodiment)

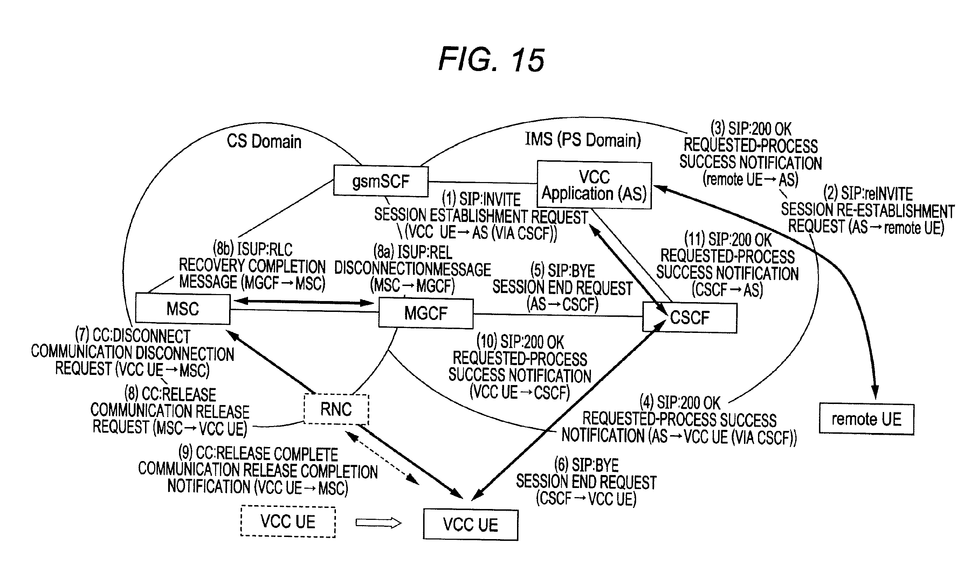

FIG. 15 is a diagram illustrating an example of the flow of control signals in a voice call communication switching system according to the fourth embodiment.

As illustrated in FIG. 15, when a VCC UE transfers from a CS domain to a PS domain while communicating with a remote UE, the VCC UE sends a session establishment request "SIP:INVITE" to an AS in the PS domain to switch the communication path from the CS domain to the PS domain (see (1) of FIG. 15).

The AS having received the session establishment request from the VCC UE sends to the remote UE a session re-establishment request "SIP:reINVITE" for switching communication control from the CS domain having been established up to this point to the PS domain (see (2) of FIG. 15). The remote UE having received the session re-establishment request from the AS sends to the AS a requested-process success notification "SIP:200 OK," which is a response to the received session re-establishment request (see (3) of FIG. 15).

The AS having received the requested-process success notification from the remote UE sends the requested-process success notification "SIP:200 OK" to the VCC UE (see (4) of FIG. 15). The AS having sent the requested-process success notification to the VCC UE sends a session end request "SIP:BYE" to a CSCF to release resources having been used by the VCC UE in the CS domain (see (5) of FIG. 15). Although specifically the AS having sent the requested-process success notification to the VCC UE may send a session end request "SIP:BYE" to an MGCF, the session end request "SIP:BYE" may be temporarily received by the CSCF that controls routing of a message such as the session end request.

The CSCF having received the session end request from the AS forwards the session end request "SIP:BYE" to the VCC UE to release the resources having been used by the VCC UE in the CS domain (see (6) of FIG. 15). The session end request "SIP:BYE" is rewritten from a transaction between the MGCF and the AS illustrated in FIG. 30 to a transaction between the UE (VCC UE) and the AS illustrated in FIG. 3, and then the rewritten session end request is sent (forwarded) from the CSCF.

The VCC UE having received the session end request from the CSCF sends a communication disconnection request "CC:DISCONNECT" to an MSC via an RNC to disconnect the communication of the VCC UE performed using the CS domain (to release the resources) (see (7) of FIG. 15). The MSC having received the communication disconnection request from the VCC UE sends to the VCC UE a communication release request "CC:RELEASE," which is a response to the communication disconnection request (see (8) of FIG. 15).

The MSC having received the communication disconnection request from the VCC UE sends a disconnection message "ISUP:Release Message (REL)" to the MGCF to release resources having been used between the MSC and the MGCF (see (8a) of FIG. 15). The MGCF having received the disconnection message sends to the MSC a recovery completion message "ISUP:Release Complete Message (RLC)" indicating that release of the resources (recovery of the resources) between the MGCF and the MSC has been completed (see (8b) of FIG. 15).

The VCC UE having received the communication release request from the MSC sends to the MSC a communication release completion notification "CC:RELEASE COMPLETE" indicating that the communication has been released (the resources have been released) (see (9) of FIG. 15). The VCC UE having sent the communication release completion notification to the MSC sends to the CSCF a requested-process success notification "SIP:200 OK," which is a response to the session end request (see (10) of FIG. 15).

The CSCF having received the requested-process success notification from the VCC UE sends the requested-process success notification "SIP:200 OK" to the AS (see (11) of FIG. 15). The requested-process success notification "SIP:200 OK" is rewritten from a transaction between the UE and the AS illustrated in FIG. 4 to a transaction between the MGCF and the AS illustrated in FIG. 31, and then the rewritten requested-process success notification is sent from the CSCF. In other words, the AS may send a resource release instruction to the MGCF. However, in the process according to the fourth embodiment, the CSCF that performs routing of a message receives the resource release instruction and rewrites routing information and then sends the rewritten resource release instruction to the VCC UE.

Namely, in the voice call communication switching system according to the fourth embodiment, instead of the AS that sends a resource release instruction in the first embodiment, the CSCF sends a resource release instruction to the VCC UE and the VCC UE to which the resource release instruction has been sent from the CSCF can exercise release of resources; as a result, quick release of the resources can be performed.

### (Configuration of the voice call communication switching system according to the fourth embodiment)

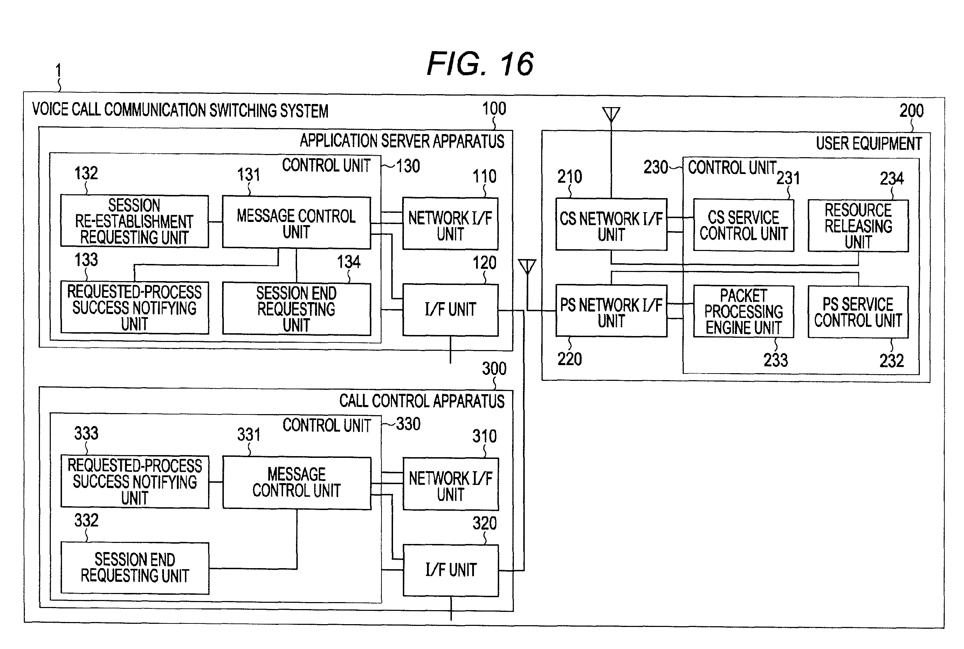

FIG. 16 is a diagram illustrating a configuration of the voice call communication switching system according to the fourth embodiment. Some configurations, functions, etc., of the voice call communication switching system 1 according to the fourth embodiment are the same as those according to the first embodiment and thus description thereof is omitted here and the function and configuration of a call control apparatus (CSCF) which is the difference between the first embodiment and the fourth embodiment will be described.

As illustrated in FIG. 16, the voice call communication switching system 1 includes an application server apparatus 100, user equipment 200, and a call control apparatus 300. The voice call communication switching system 1 communicably connects networks having different communication control protocols, i.e., a CS domain, which is a circuit-switched network, and a PS domain, which is an IP packet network, and provides a service for establishing communication between pieces of user equipment using the networks. The call control apparatus 300 includes a network I/F unit 310, an I/F unit 320, and a control unit 330. The call control apparatus 300 performs routing control of a communication control message exchanged between the networks.

The network I/F unit 310 controls wireless communication of various information exchanged with the user equipment 200, etc., via the Internet. For example, when the user equipment 200 communicates with another user equipment via the Internet, the network I/F unit 310 performs sending/receiving of a message exchanged for the communication.

The I/F unit 320 controls wired communication of various information exchanged with an apparatus other than the call control apparatus 300 in the same network. For example, the I/F unit 320 controls, in the PS domain, which is an IP packet network, wired communication of various information (sending/receiving of a message, etc.) exchanged between an MGCF that performs, for example, conversion or coordination of different communication control protocols between the CS domain and the PS domain, and an AS that performs control of, for example, switching of communication exchanged between the CS domain and the PS domain.

The control unit 330 has an internal memory for storing a control program, a program that specifies various processing steps, etc., and required data. Also, the control unit 330 performs, for example, routing control of a message when the user equipment 200 communicates with another user equipment, and management of other service information.

A message control unit 331 performs, when a domain to which the user equipment 200 belongs is switched to another, control of a message required to release resources of the domain having been used up to this point. The message control unit 331 performs control of various message information to be communicated with the call control apparatus 300.

Specifically, when the domain to which the user equipment 200 belongs is switched from the CS domain to the PS domain and accordingly a session establishment request "SIP:INVITE," which is a message for switching to the PS domain, is sent to the application server apparatus 100, the message control unit 331 receives a session end request "SIP:BYE" message required to release resources of the CS domain having been used up to this point, from the application server apparatus 100 via the I/F unit 320. The message control unit 331 changes the session end request "SIP:BYE" received from the application server apparatus 100, from a transaction between the AS and the MGCF (see FIG. 30) to a transaction between the AS and the VCC UE (see FIG. 3) and then sends the changed session end request to the user equipment 200.

When the message control unit 331 receives an instruction message to release resources of the circuit-switched network having been used by the user equipment 200, which is sent from the application server apparatus 100, a session end requesting unit 332 requests the message control unit 331 to send to the user equipment 200 the instruction message to release the resources.

Specifically, when the message control unit 331 receives a session end request "SIP:BYE" message that is an instruction message to release resources of the CS domain, which is a circuit-switched network having been used by the user equipment 200, and that is sent from the application server apparatus 100, the session end requesting unit 332 requests the message control unit 331 to send to the user equipment 200 the session end request "SIP:BYE" message, which is an instruction message to release the resources having been used by the user equipment 200 in the CS domain.

When a requested-process success notifying unit 333 receives a message, which is a response from the user equipment 200 having received a message that is an instruction to release resources having been used by the user equipment 200 in the circuit-switched network and that is sent from the message control unit 331, the requested-process success notifying unit 333 sends the received message to the application server apparatus 100.

Specifically, when the requested-process success notifying unit 333 receives a requested-process success notification "SIP:200 OK," which is a response message from the user equipment 200 having received a session end request "SIP:BYE" that is an instruction to release resources having been used by the user equipment 200 in the CS domain which is a circuit-switched network and that is sent from the message control unit 331, the requested-process success notifying unit 333 sends the requested-process success notification "SIP:200 OK" to the application server apparatus 100.

### (Resource release instruction process according to the fourth embodiment)

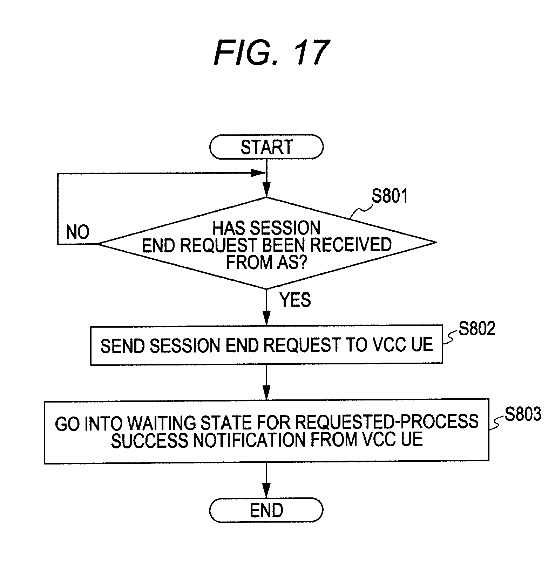

FIG. 17 is a flowchart for describing a resource release instruction process performed by the call control apparatus 300 according to the fourth embodiment. The following describes a process performed by the call control apparatus 300 (CSCF) after (4) in FIG. 15 in the above-described summary of the fourth embodiment.

As illustrated in FIG. 17, when the call control apparatus 300 receives from the application server apparatus 100 a session end request "SIP:BYE," which is an instruction message to release resources having been used by the user equipment 200 in the CS domain (Yes at step S801), the call control apparatus 300 rewrites the session end request "SIP:BYE" from a transaction between the MGCF and the AS illustrated in FIG. 30 to a transaction between the UE (VCC UE) and the AS illustrated in FIG. 3, and then forwards the rewritten session end request to the VCC UE (user equipment 200) (step S802).

The call control apparatus 300 having sent to the user equipment 200 the session end request "SIP:BYE," which is a resource release instruction, goes into a waiting state for receiving a requested-process success notification "SIP:200 OK," which is a response message to the session end request (step S803) The user equipment 200 having received the resource release instruction performs the same process as that performed in the first embodiment to exercise release of the resources.

### (Process of receiving a requested-process success notification in response to a resource release instruction according to the fourth embodiment)

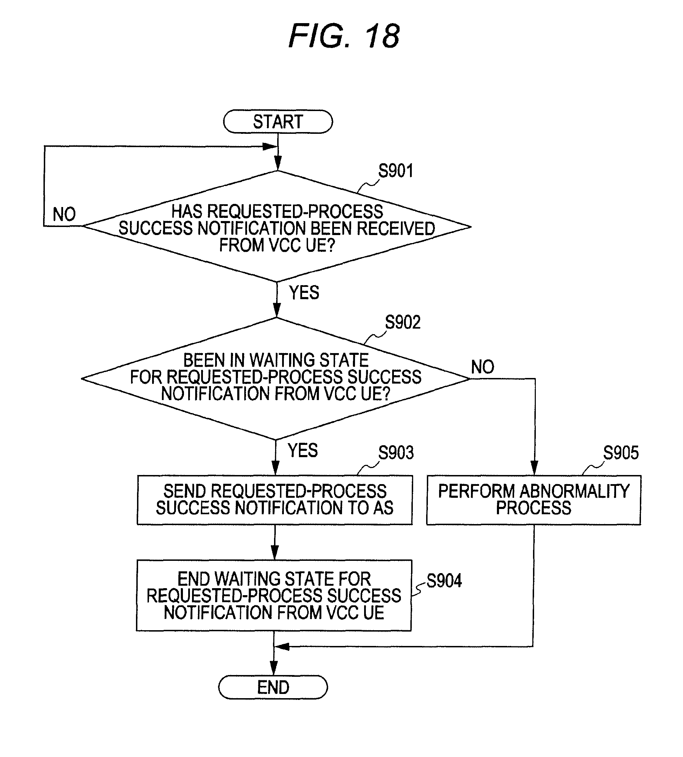

FIG. 18 is a flowchart for describing a process of receiving a requested-process success notification in response to a resource release instruction, which is performed by the call control apparatus 300 according to the fourth embodiment.

As illustrated in FIG. 18, when the call control apparatus 300 receives a requested-process success notification "SIP:200 OK" from the user equipment 200 (Yes at step S901), the call control apparatus 300 determines whether the call control apparatus 300 has been in a waiting state for a requested-process success notification from the user equipment 200 having sent the requested-process success notification "SIP:200 OK" (step S902).

If, at step S902, the call control apparatus 300 has been in a waiting state for a requested-process success notification from the user equipment 200 having sent the requested-process success notification "SIP:200 OK" (Yes at step S902), then the call control apparatus 300 rewrites the requested-process success notification "SIP:200 OK" from a transaction between the UE (VCC UE) and the AS illustrated in FIG. 4 to a transaction between the MGCF and the AS illustrated in FIG. 31, and then sends the rewritten requested-process success notification to the AS (application server apparatus 100) (step S903).

The call control apparatus 300 having sent the requested-process success notification "SIP:200 OK" to the AS ends the waiting state for a requested-process success notification from the user equipment 200 (step S904). Note that if, at step S902, the call control apparatus 300 has not been in a waiting state for a requested-process success notification from the user equipment 200 having sent the requested-process success notification "SIP:200 OK" (No at step S902), then the call control apparatus 300 performs an abnormality process such as saving, as a log, abnormality indicating that the call control apparatus 300 has received the requested-process success notification "SIP:200 OK" despite the fact that the call control apparatus 300 has not been in a waiting state for such a notification (step S905).

### (Effect provided by the fourth embodiment)

As such, according to the fourth embodiment, in the voice call communication switching system 1, the call control apparatus 300 receives an instruction to release resources that is sent to the MGCF from the application server apparatus 100, and rewrites the instruction to a message for the user equipment 200 and then sends the rewritten instruction to the user equipment 200. Accordingly, release of the resources can be quickly performed.

### (Fifth Embodiment)

The fourth embodiment describes the case in which an instruction to release resources is sent to user equipment 200 and the user equipment 200 exercises release of the resources. However, the system is not limited thereto and it is also possible to send an instruction to release resources to each of the user equipment 200 and a control signal conversion apparatus (MGCF) that performs control to communicably connect a CS domain to a PS domain, and exercise release of the resources by each apparatus.

Each configuration and some functions of the following voice call communication switching system 1 according to a fifth embodiment are the same as those according to the fourth embodiment and thus description thereof is omitted here and an instruction to release resources which is the difference between the fourth embodiment and the fifth embodiment will be described.

### (Resource release instruction process according to the fifth embodiment)

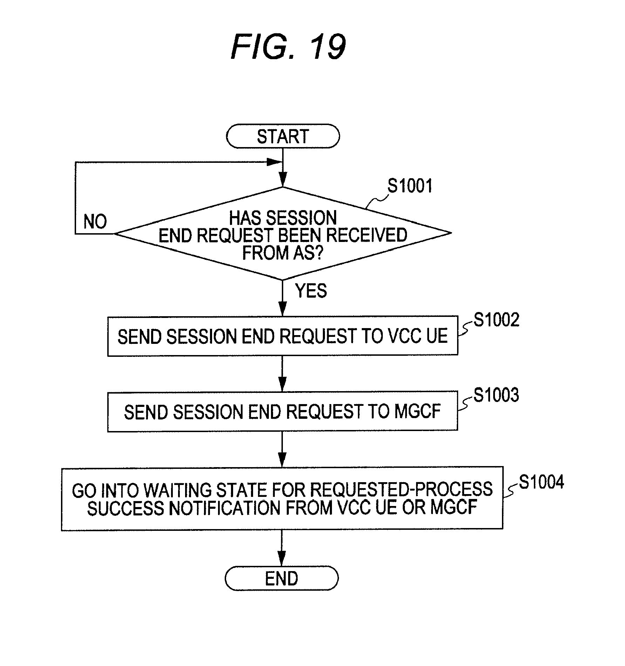

As illustrated in FIG. 19, when a call control apparatus 300 receives from an application server apparatus 100 a session end request "SIP:BYE" which is an instruction message to release resources having been used by the user equipment 200 in the CS domain (Yes at step S1001), the call control apparatus 300 rewrites the session end request "SIP:BYE" from a transaction between the MGCF and the AS illustrated in FIG. 30 to a transaction between the UE (VCC UE) and the AS illustrated in FIG. 3 and then forwards the rewritten session end request to the VCC UE (user equipment 200) (step S1002).

The call control apparatus 300 sends the session end request "SIP:BYE" to the user equipment 200 and also to the control signal conversion apparatus (MGCF) (step S1003). For the session end request "SIP:BYE" sent to the control signal conversion apparatus (MGCF), without changing a transaction thereof, the same message received from the application server apparatus 100 is sent.

The call control apparatus 300 having sent to the user equipment 200 and the MGCF the session end request "SIP:BYE," which is a resource release instruction, goes into a waiting state for receiving a requested-process success notification "SIP:200 OK," which is a response message to the session end request (step S1004). Note that the user equipment 200 and the MGCF having received the resource release instruction perform the same process as that performed in the second embodiment to exercise release of the resources.

### (Process of receiving a requested-process success notification in response to a resource release instruction according to the fifth embodiment)

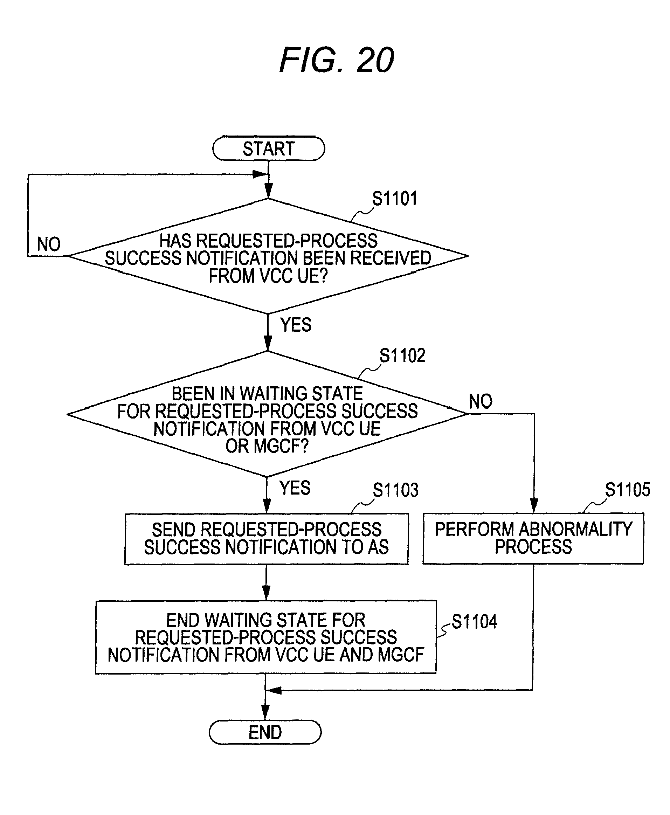

FIG. 20 is a flowchart for describing a process of receiving a requested-process success notification from the user equipment 200 in response to a resource release instruction, which is performed by the call control apparatus 300 according to the fifth embodiment.

As illustrated in FIG. 20, when the call control apparatus 300 receives a requested-process success notification "SIP:200 OK" from the user equipment 200 (Yes at step S1101), the call control apparatus 300 determines whether the call control apparatus 300 has been in a waiting state for a requested-process success notification from the MGCF or the user equipment 200 that has sent the requested-process success notification "SIP:200 OK" (step S1102).

If, at step S1102, the call control apparatus 300 has been in a waiting state for a requested-process success notification from the MGCF or the user equipment 200 having sent the requested-process success notification "SIP:200 OK" (Yes at step S1102), then the call control apparatus 300 rewrites the requested-process success notification "SIP:200 OK" from a transaction between the UE (VCC UE) and the AS illustrated in FIG. 4 to a transaction between the MGCF and the AS illustrated in FIG. 31, and then sends the rewritten requested-process success notification to the AS (application server apparatus 100) (step S1103).

The call control apparatus 300 having sent the requested-process success notification "SIP:200 OK" to the AS ends the waiting state for a requested-process success notification from the user equipment 200 and the MGCF (step S1104). Note that if, at step S1102, the call control apparatus 300 has not been in a waiting state for a requested-process success notification from the MGCF or the user equipment 200 that has sent the requested-process success notification "SIP:200 OK" (No at step S1102), then the call control apparatus 300 performs an abnormality process such as saving, as a log, abnormality indicating that the call control apparatus 300 has received the requested-process success notification "SIP:200 OK" despite the fact that the call control apparatus 300 has not been in a waiting state for such a notification (step S1105).

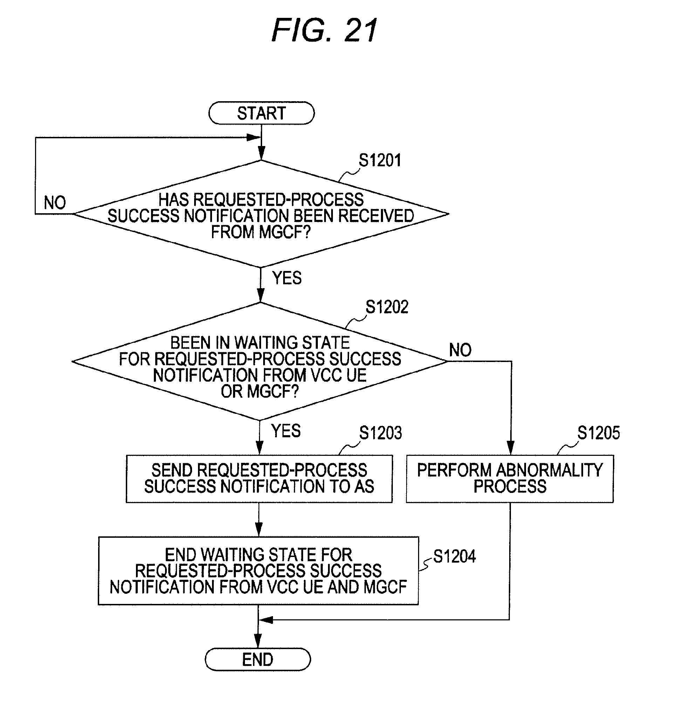

FIG. 21 is a flowchart for describing a process of receiving a requested-process success notification from the control signal conversion apparatus in response to a resource release instruction, which is performed by the call control apparatus 300 according to the fifth embodiment.

As illustrated in FIG. 21, when the call control apparatus 300 receives a requested-process success notification "SIP:200 OK" from the control signal conversion apparatus (MGCF) (Yes at step S1201), the call control apparatus 300 determines whether the call control apparatus 300 has been in a waiting state for a requested-process success notification from the user equipment 200 or the MGCF that has sent the requested-process success notification "SIP:200 OK" (step S1202).

If, at step S1202, the call control apparatus 300 has been in a waiting state for a requested-process success notification from the user equipment 200 or the MGCF having sent the requested-process success notification "SIP:200 OK" (Yes at step S1202), then the call control apparatus 300 sends the requested-process success notification "SIP:200 OK" to the AS (application server apparatus 100) (step S1203). This requested-process success notification "SIP:200 OK" is a requested-process success notification made in response to a session end request "SIP:BYE," which is sent to the MGCF from the AS, and thus, is sent to the AS as it is without changing a transaction thereof.

The call control apparatus 300 having sent the requested-process success notification "SIP:200 OK" to the AS ends the waiting state for a requested-process success notification from the user equipment 200 and the MGCF (step S1204). Note that if, at step S1202, the call control apparatus 300 has not been in a waiting state for a requested-process success notification from the user equipment 200 or the MGCF that has sent the requested-process success notification "SIP:200 OK" (No at step S1202), then the call control apparatus 300 performs an abnormality process such as saving, as a log, abnormality indicating that the call control apparatus 300 has received the requested-process success notification "SIP:200 OK" despite the fact that the call control apparatus 300 has not been in a waiting state for such a notification (step S1205).

### (Effect provided by the fifth embodiment)

As such, according to the fifth embodiment, in the voice call communication switching system 1, an instruction to release resources is sent not only to the user equipment 200 but also to the control signal conversion apparatus, and the user equipment 200 and the control signal conversion apparatus that have received the instruction to release resources exercise release of the resources, and thus, the resources can be more quickly released.

### (Sixth Embodiment)

The fifth embodiment describes the case in which regardless of whether a control signal conversion apparatus (MGCF) is congested or not, an instruction to release resources is sent to the control signal conversion apparatus and user equipment 200. However, the system is not limited thereto and it is also possible to send an instruction to release resources to the user equipment 200 when the control signal conversion apparatus is congested, and send an instruction to release resources to the control signal conversion apparatus when the control signal conversion apparatus is not congested.

### (Configuration of a voice call communication switching system according to the sixth embodiment)

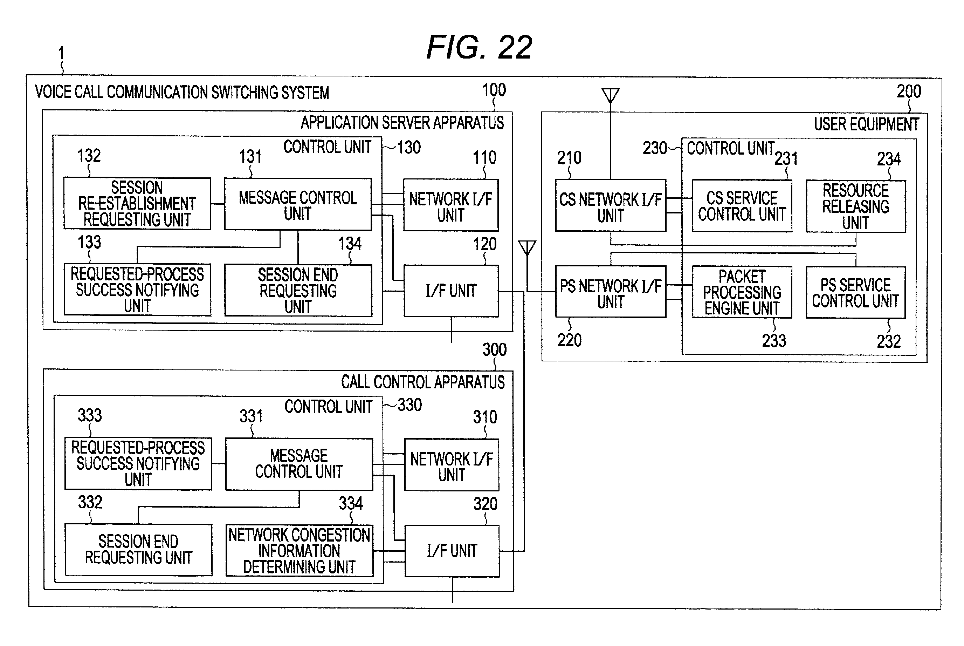

FIG. 22 is a diagram illustrating a configuration of a voice call communication switching system 1 according to the sixth embodiment. In the sixth embodiment, a network congestion information determining unit 334 that determines whether an MGCF is congested and a session end requesting unit 332 that instructs to release resources, which are the differences between the fourth embodiment and the sixth embodiment, will be described.

When a message control unit 331 receives an instruction message to release resources having been used by user equipment 200 in a circuit-switched network, which is sent from an application server apparatus 100, the network congestion information determining unit 334 determines whether a control signal is congested in a control signal conversion apparatus. The control signal conversion apparatus is provided between the circuit-switched network and an IP packet network and performs control to communicably connect the circuit-switched network to the IP packet network.

Specifically, when the message control unit 331 receives a session end request "SIP:BYE" that is an instruction message to release resources having been used by the user equipment 200 in a CS domain, which is a circuit-switched network, and that is sent from the application server apparatus 100, the network congestion information determining unit 334 determines whether an MGCF is congested. The MGCF is provided between the CS domain and a PS domain and performs control to communicably connect the CS domain to the PS domain.

If the network congestion information determining unit 334 determines that a control signal is congested in the control signal conversion apparatus, then the session end requesting unit 332 sends to the user equipment 200 a resource release instruction to disconnect the communication between the circuit-switched network and the user equipment 200.

Specifically, if the network congestion information determining unit 334 determines that a control signal is congested in the MGCF, then the session end requesting unit 332 requests the message control unit 331 to send to the user equipment 200 a session end request "SIP:BYE," which is an instruction message to release the resources of the CS domain, which is a circuit-switched network, having been used by the user equipment 200. The message control unit 331 having been requested to send a session end request "SIP:BYE" to the user equipment 200 rewrites the session end request "SIP:BYE" from a transaction between the AS and the MGCF to a transaction between the AS and the VCC UE and then sends the rewritten session end request to the user equipment 200.

On the other hand, if the network congestion information determining unit 334 determines that a control signal is not congested in the control signal conversion apparatus, then the session end requesting unit 332 sends to the control signal conversion apparatus a resource release instruction to disconnect the communication between the circuit-switched network and the user equipment 200.

Specifically, if the network congestion information determining unit 334 determines that a control signal is not congested in the MGCF, then the session end requesting unit 332 requests the message control unit 331 to send to the MGCF (control signal conversion apparatus) a session end request "SIP:BYE," which is an instruction message to release the resources of the CS domain, which is a circuit-switched network, having been used by the user equipment 200. The message control unit 331 having been requested to send a session end request "SIP:BYE" to the MGCF sends the session end request "SIP:BYE" to the MGCF without rewriting a transaction thereof.

### (Resource release instruction process according to the sixth embodiment)

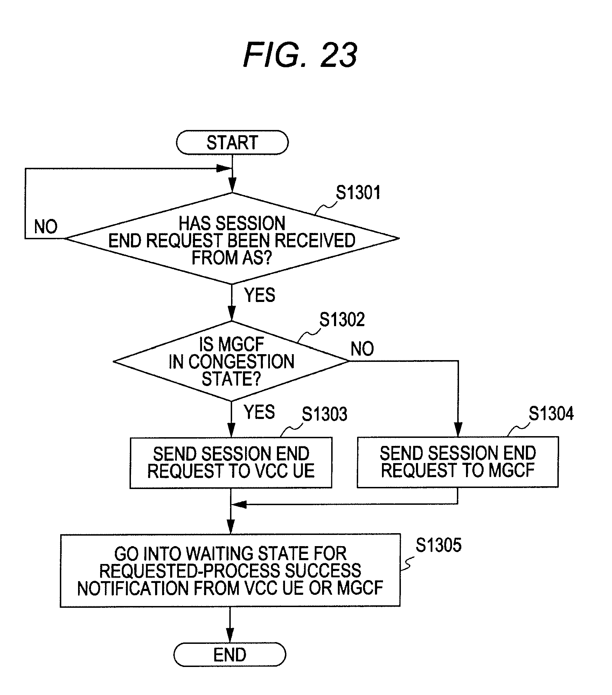

FIG. 23 is a flowchart for describing a resource release instruction process performed by a call control apparatus 300 according to the sixth embodiment.

As illustrated in FIG. 23, when the call control apparatus 300 receives from the application server apparatus 100 a session end request "SIP:BYE," which is an instruction message to release resources having been used by the user equipment 200 in the CS domain (Yes at step S1301), the call control apparatus 300 determines whether a control signal in the MGCF is in a congestion state (step S1302).

If the call control apparatus 300 determines that a control signal in the MGCF is in a congestion state (Yes at step S1302), then the call control apparatus 300 rewrites the session end request "SIP:BYE," which is a resource release instruction to release resources having been used by the user equipment 200 in the CS domain, from a transaction between the MGCF and the AS illustrated in FIG. 30 to a transaction between the UE (VCC UE) and the AS illustrated in FIG. 3, and then forwards the rewritten session end request to the VCC UE (user equipment 200) (step S1303).

On the other hand, if the call control apparatus 300 determines that a control signal in the MGCF is not in a congestion state (No at step S1302), then the call control apparatus 300 sends to the MGCF the session end request "SIP:BYE," which is a resource release instruction to release resources having been used by the user equipment 200 in the CS domain, without rewriting a transaction thereof (step S1304).

Thereafter, the call control apparatus 300 having sent to the user equipment 200 or the MGCF the session end request "SIP:BYE," which is a resource release instruction, goes into a waiting state for receiving a requested-process success notification "SIP:200 OK," which is a response message to the session end request (step S1305).

### (Process of receiving a requested-process success notification in response to a resource release instruction according to the sixth embodiment)

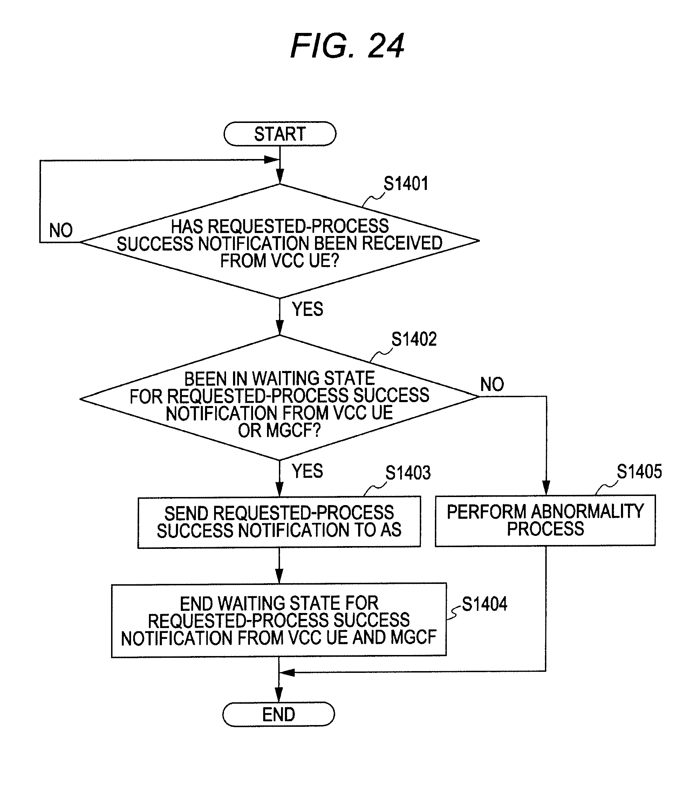

FIG. 24 is a flowchart for describing a process of receiving a requested-process success notification from the user equipment 200 in response to a resource release instruction, which is performed by the call control apparatus 300 according to the sixth embodiment.

As illustrated in FIG. 24, when the call control apparatus 300 receives a requested-process success notification "SIP:200 OK" from the user equipment 200 (Yes at step S1401), the call control apparatus 300 determines whether the call control apparatus 300 has been in a waiting state for a requested-process success notification from the MGCF or the user equipment 200 that has sent the requested-process success notification "SIP:200 OK" (step S1402).

If, at step S1402, the call control apparatus 300 has been in a waiting state for a requested-process success notification from the MGCF or the user equipment 200 having sent the requested-process success notification "SIP:200 OK" (Yes at step S1402), then the call control apparatus 300 rewrites the requested-process success notification "SIP:200 OK" from a transaction between the UE (VCC UE) and the AS illustrated in FIG. 4 to a transaction between the MGCF and the AS illustrated in FIG. 31, and then sends the rewritten requested-process success notification to the AS (application server apparatus 100) (step S1403).

The call control apparatus 300 having sent the requested-process success notification "SIP:200 OK" to the AS ends the waiting state for a requested-process success notification from the user equipment 200 and the MGCF (step S1404). Note that if, at step S1402, the call control apparatus 300 has not been in a waiting state for a requested-process success notification from the MGCF or the user equipment 200 that has sent the requested-process success notification "SIP:200 OK" (No at step S1402), then the call control apparatus 300 performs an abnormality process such as saving, as a log, abnormality indicating that the call control apparatus 300 has received the requested-process success notification "SIP:200 OK" despite the fact that the call control apparatus 300 has not been in a waiting state for such a notification (step S1405).

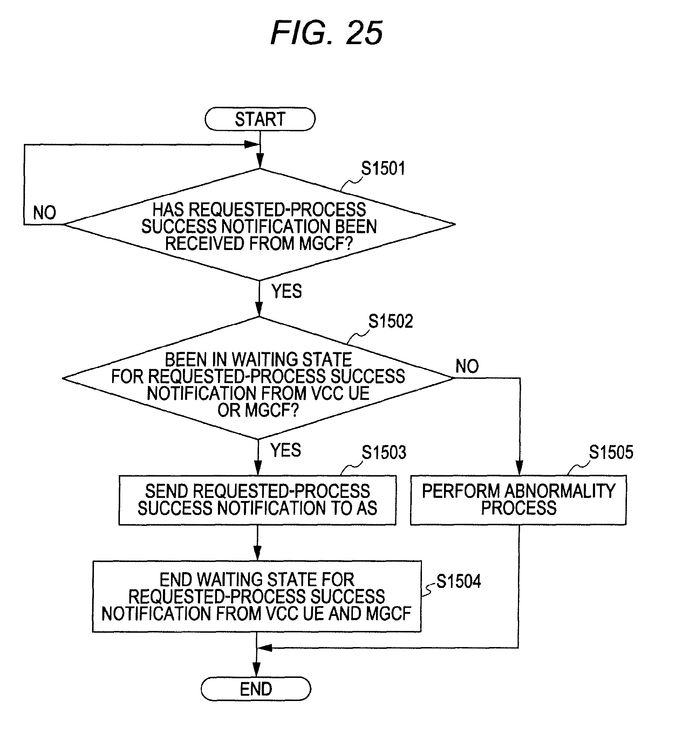

FIG. 25 is a flowchart for describing a process of receiving a requested-process success notification from the control signal conversion apparatus in response to a resource release instruction, which is performed by the call control apparatus 300 according to the sixth embodiment.

As illustrated in FIG. 25, when the call control apparatus 300 receives a requested-process success notification "SIP:200 OK" from the control signal conversion apparatus (MGCF) (Yes at step S1501), the call control apparatus 300 determines whether the call control apparatus 300 has been in a waiting state for a requested-process success notification from the user equipment 200 or the MGCF that has sent the requested-process success notification "SIP:200 OK" (step S1502).

If, at step S1502, the call control apparatus 300 has been in a waiting state for a requested-process success notification from the user equipment 200 or the MGCF having sent the requested-process success notification "SIP:200 OK" (Yes at step S1502), then the call control apparatus 300 sends the requested-process success notification "SIP:200 OK" to the AS (application server apparatus 100) (step S1503). This requested-process success notification "SIP:200 OK" is a requested-process success notification made in response to a session end request "SIP:BYE," which is sent to the MGCF from the AS, and thus, is sent to the AS as it is without changing a transaction thereof.

The call control apparatus 300 having sent the requested-process success notification "SIP:200 OK" to the AS ends the waiting state for a requested-process success notification from the user equipment 200 and the MGCF (step S1504). Note that if, at step S1502, the call control apparatus 300 has not been in a waiting state for a requested-process success notification from the user equipment 200 or the MGCF that has sent the requested-process success notification "SIP:200 OK" (No at step S1502), then the call control apparatus 300 performs an abnormality process such as saving, as a log, abnormality indicating that the call control apparatus 300 has received the requested-process success notification "SIP:200 OK" despite the fact that the call control apparatus 300 has not been in a waiting state for such a notification (step S1505).

### (Effect provided by the sixth embodiment)

As such, according to the sixth embodiment, in the voice call communication switching system 1, an instruction to release resources is sent to the user equipment 200 when the MGCF is congested, and is sent to the MGCF when the MGCF is not congested. Accordingly, without aggravating the congestion of the MGCF, the resources can be more quickly released.

### (Seventh Embodiment)

The system may be implemented in various other modes other than in the above-described embodiments. Now, an embodiment will be described in which (1) the configuration of a voice call communication switching system and (2) a program are different from those described in the above embodiments.

### (1) Configuration of a voice call communication switching system

Information including processing steps, control steps, specific names, and various data and parameters that is described herein or the drawings (e.g., a specific name such as the "session end requesting unit 134" illustrated in FIG. 2) can be changed unless otherwise noted.

The components of the apparatuses illustrated are functionally conceptual and thus do not necessarily need to be physically configured in the manner illustrated. That is, specific modes of distribution/integration of the apparatuses are not limited to those illustrated; for example, a process performed by the message control unit 131 may be performed by the session re-establishment requesting unit 132, the requested-process success notifying unit 133, and the session end requesting unit 134. As such, the apparatuses can be configured by functionally or physically distributing/integrating all or part thereof in a unit, according to various loads, usage patterns, etc. Furthermore, all or any part of processing functions performed by the apparatuses can be implemented by a CPU and a program that is analyzed and executed by the CPU or can be implemented as hardware using wired logic.

### (2) Program

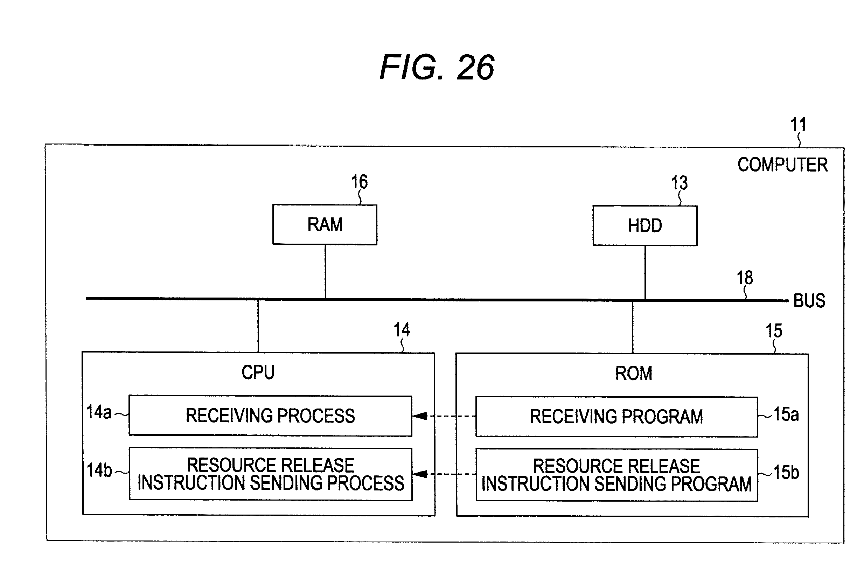

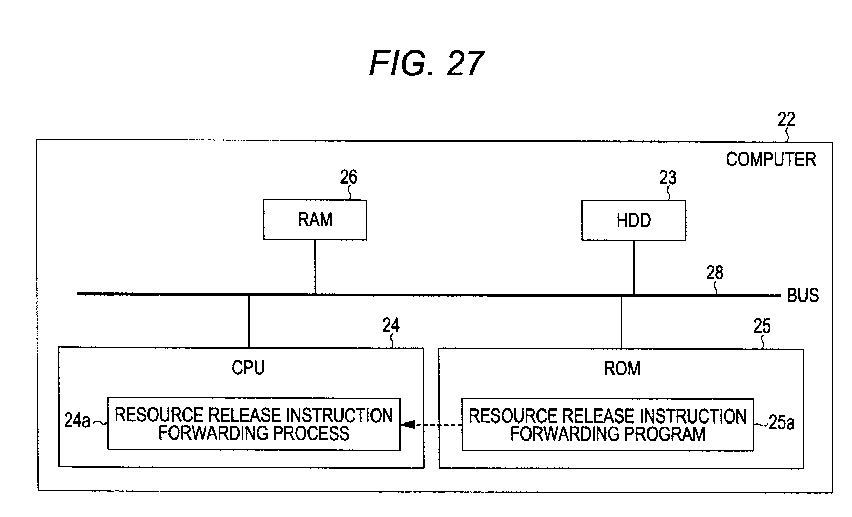

The foregoing embodiments describe the case in which various processes are implemented by hardware logic. Embodiments of the present invention are not limited thereto and such processes may be implemented by executing a program prepared in advance by a computer. The following describes, using FIGS. 26 and 27, an example of a computer that executes a resource release instruction sending program and a resource release instruction forwarding program which have the same functions as the application server apparatus 100 and the call control apparatus 300 illustrated in the above-described embodiments. FIG. 26 is a diagram illustrating a computer that executes a resource release instruction sending program. FIG. 27 is a diagram illustrating a computer that executes a resource release instruction forwarding program.

As illustrated in FIG. 26, in a computer 11 serving as an application server apparatus, an HDD 13, a CPU 14, a ROM 15, and a RAM 16 are connected to one another via a bus 18.

The ROM 15 has stored therein in advance a resource release instruction sending program that exerts the same function as that of the application server apparatus 100 illustrated in the first embodiment, i.e., as illustrated in FIG. 26, a receiving program 15a and a resource release instruction sending program 15b. The programs 15a and 15b may be appropriately integrated or distributed, as with the components of the application server apparatus 100 illustrated in FIG. 2.

By the CPU 14 reading and executing the programs 15a and 15b from the ROM 15, as illustrated in FIG. 26, the programs 15a and 15b respectively function as a receiving process 14a and a resource release instruction sending process 14b. Note that the processes 14a and 14b respectively correspond to the message control unit 131 and the session end requesting unit 134 illustrated in FIG. 2.

The CPU 14 executes the resource release instruction sending program 15b based on data recorded in the RAM 16.

Note that the programs 15a and 15b do not necessarily need to be stored in the ROM 15 from the beginning. For example, the programs may be stored in, for example, a "portable physical medium" to be inserted into the computer 11, such as a flexible disk (FD), a CD-ROM, a DVD disk, a magneto-optical disk, or an IC card, or a "fixed physical medium" provided internal or external to the computer 11, such as an HDD, or "another computer (or a server)" to be connected to the computer 11 via a public line, the Internet, a LAN, or a WAN, and the computer 11 may read and execute the programs.

As illustrated in FIG. 27, in a computer 22 serving as a call control apparatus, an HDD 23, a CPU 24, a ROM 25, and a RAM 26 are connected to one another via a bus 28.

The ROM 25 has stored therein in advance a resource release instruction forwarding program that exerts the same function as that of the call control apparatus 300 illustrated in the fourth embodiment, i.e., as illustrated in FIG. 27, a resource release instruction forwarding program 25a. The program 25a may be appropriately integrated or distributed, as with the components of the call control apparatus 300 illustrated in FIG. 16.

By the CPU 24 reading and executing the program 25a from the ROM 25, as illustrated in FIG. 27, the program 25a functions as a resource release instruction forwarding process 24a. The process 24a corresponds to the session end requesting unit 332 illustrated in FIG. 16.

The CPU 24 executes the resource release instruction forwarding program 25a based on data recorded in the RAM 26.

Note that the program 25a does not necessarily need to be stored in the ROM 25 from the beginning. For example, the program may be stored in, for example, a "portable physical medium" to be inserted into the computer 22, such as a flexible disk (FD), a CD-ROM, a DVD disk, a magneto-optical disk, or an IC card, or a "fixed physical medium" provided internal or external to the computer 22, such as an HDD, or "another computer (or a server)" to be connected to the computer 22 via a public line, the Internet, a LAN, or a WAN, and the computer 22 may read and execute the program.
In any of the above aspects, the various features may be implemented in hardware, or as software modules running on one or more processors. Features of one aspect may be applied to any of the other aspects.
The invention also provides a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

According to the voice call communication switching systems disclosed herein, quick release of resources can be performed.
All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a illustrating of the superiority and inferiority of embodiments of the invention. Although the embodiment(s) of the present inventions have been described in detail, it should be understood that the various changes, substitutions, and alterations could be made hereto without departing from the scope of the invention.

## Claims

1. A voice call communication switching system in which a first network and a second network are communicably connected to each other, the voice call communication switching system comprising:
a user equipment that establishes communication using the networks; and
an application server that is provided in the second network and controls communication exchanged between the networks, wherein
the application server includes:
a message control unit that receives a message to be sent from the user equipment when a situation is changed from one where the user equipment communicates with another user equipment using resources of the first network to another where the user equipment communicates with the another user equipment using resources of the second network; and
a session end requesting unit that sends, when the message control unit receives the message, a resource release instruction to disconnect the communication between the first network and the user equipment, to the user equipment through the message control unit, and
the user equipment includes a resource releasing unit that sends, when receiving the resource release instruction, a message indicating release of the resources having been used in the first network to a node that controls the first network.

2. The voice call communication switching system according to claim 1, further comprising a control signal conversion apparatus that performs control to communicably connect the first network to the second network is further connected between the first network and the second network in the voice call communication switching system,
wherein when the message control unit receives the message sent from the user equipment, the session end requesting unit sends the resource release instruction to disconnect the communication between the first network and the user equipment through the message control unit, to each of the user equipment and the control signal conversion apparatus.

3. The voice call communication switching system according to claim 1 or 2, further comprising a control signal conversion apparatus that performs control to communicably connect the first network to the second network is further connected between the first network and the second network in the voice call communication switching system,
the application server further includes a network congestion information determining unit that determines whether a control signal is congested in the control signal conversion apparatus,
wherein if the network congestion information determining unit determines that the control signal is congested in the control signal conversion apparatus, then the session end requesting unit sends to the user equipment the resource release instruction to disconnect the communication between the first network and the user equipment through the message control unit, and
if the network congestion information determining unit determines that the control signal is not congested in the control signal conversion apparatus, then the session end requesting unit sends to the control signal conversion apparatus the resource release instruction to disconnect the communication between the first network and the user equipment through the message control unit.

4. A voice call communication switching system in which a first network and a second network are communicably connected to each other, the voice call communication switching system comprising:
a user equipment that establishes communication using the networks;
an application server that is provided in the second network and controls communication exchanged between the networks; and
a call control apparatus that controls routing of a communication control message exchanged between the networks, wherein
the application server includes:
a message control unit that receives a message to be sent from the user equipment when a situation is changed from one where the user equipment communicates with another user equipment using resources of the first network to another where the user equipment communicates with the another user equipment using resources of the second network; and
a session end requesting unit that sends, when the message control unit receives the message, a resource release instruction to disconnect the communication between the first network and the user equipment through the message control unit, to the call control apparatus,
the call control apparatus includes a session end requesting unit that forwards, when receiving the resource release instruction, the resource release instruction to disconnect the communication between the first network and the user equipment, to the user equipment through a message control unit, and
the user equipment includes a resource releasing unit that sends, when receiving the resource release instruction having been forwarded from the session end requesting unit of the call control apparatus, a message indicating release of the resources having been used in the first network to a node that controls the first network.

5. The voice call communication switching system according to claim 4, further comprising a control signal conversion apparatus that performs control to communicably connect the first network to the second network is further connected between the first network and the second network in the voice call communication switching system,
wherein when the session end requesting unit receives the resource release instruction, the session end requesting unit sends the resource release instruction to disconnect the communication between the first network and the user equipment through the message control unit, to each of the user equipment and the control signal conversion apparatus.

6. The voice call communication switching system according to claim 4 or 5, further comprising a control signal conversion apparatus that performs control to communicably connect the first network to the second network is further connected between the first network and the second network in the voice call communication switching system,
the call control apparatus further includes a network congestion information determining unit that determines whether a control signal is congested in the control signal conversion apparatus,
wherein if the network congestion information determining unit determines that the control signal is congested in the control signal conversion apparatus, then the session end requesting unit forwards to the user equipment the resource release instruction to disconnect the communication between the first network and the user equipment through the message control unit, and
if the network congestion information determining unit determines that the control signal is not congested in the control signal conversion apparatus, then the session end requesting unit forwards to the control signal conversion apparatus the resource release instruction to disconnect the communication between the first network and the user equipment through the message control unit.

7. A application server in a voice call communication switching system in which a first network and a second network are communicably connected to each other, is provided in the second network and controls communication exchanged between the networks, the application server comprising:
a message control unit that receives a message to be sent from a user equipment that establishes communication using the networks when a situation is changed from one where the user equipment communicates with another user equipment using resources of the first network to another where the user equipment communicates with the another user equipment using resources of the second network; and
a session end requesting unit that sends, when the message control unit receives the message, a resource release instruction to disconnect the communication between the first network and the user equipment, to the user equipment through the message control unit.

8. A voice call communication switching method suitable for a voice call communication switching system in which a first network and a second network are communicably connected to each other and which includes user equipment that establishes communication using the networks; and in which a application server is provided in the second network and controls communication exchanged between the networks, the method comprising:
a receiving step of receiving, by the application server, a message to be sent from the user equipment when a situation is changed from one where the user equipment communicates with another user equipment using resources of the first network to another where the user equipment communicates with the another user equipment using resources of the second network;
a resource release instruction sending step of sending, by the application server, a resource release instruction to disconnect the communication between the first network and the user equipment, to the user equipment when the message is received in the receiving step; and
a resource releasing step of sending, by the user equipment, a message indicating release of the resources having been used in the first network to a node that controls the first network, when the resource release instruction is received.
